# EUROPÄISCHE PATENTSCHRIFT

(11) **EP 2 170 971 B1**
(45) Veröffentlichungstag und Bekanntmachung des Hinweises auf die Patenterteilung: **02.02.2011**
(21) Anmeldenummer: 08775020.4
(22) Anmeldetag: 11.07.2008
(51) Int. Cl.: C08G 18/08, C08G 18/28, C08G 18/70, C09D 175/04

(54) **WASSERDISPERGIERBARE POLYISOCYANATE**
WATER-DISPERSIBLE POLYISOCYANATES
POLYISOCYNATES DISPERSIBLES DANS L'EAU

(30) Priorität: 19.07.2007 EP 07112768
(43) Veröffentlichungstag der Anmeldung: 07.04.2010
(73) Patentinhaber: BASF SE, 67056 Ludwigshafen (DE)
(72) Erfinder: SCHÄFER, Harald, 68219 Mannheim (DE); ZECH, Thomas, 67240 Bobenheim-roxheim (DE); DÜNKEL, Arno, 74909 Meckesheim (DE); WIEMER, Nicolas, 67245 Lambsheim (DE); KELLER, Peter, 66583 Spiesen-elversberg (DE); STEINBRECHER, Angelika Maria, 70197 Stuttgart (DE)
(86) Internationale Anmeldenummer: PCT/EP2008/059103
(87) Internationale Veröffentlichungsnummer: WO 2009/010469

(56) Entgegenhaltungen:
- WO-A-01/88006
- WO-A-2007/063026
- DE-A1- 2 651 506
- DE-A1- 19 958 170

## Beschreibung

Die vorliegende Erfindung betrifft verbesserte wasserdispergierbare Polyisocyanate insbesondere für zweikomponentige Polyurethanlacke oder wäßrige Dispersionsklebstoffe.

Wasserdispergierbare Polyisocyanate sind bereits seit langem bekannt und werden häufig als Vernetzerkomponente zusammen mit wäßrigen Polyollösungen in wäßrigen Lacksystemen eingesetzt. Dabei haben sich eine Vielzahl von wasserdispergierend wirkenden Bestandteilen solcher Polyisocyanate bewährt.

DE 4113160 A1 beschreibt wasserdispergierbare Polyisocyanate, die sowohl Polyethergruppen als auch Carboxylatgruppen aufweisen.

Derartige Carboxylatgruppen als dispergieraktive Gruppen aufweisenden Polyisocyanate weisen jedoch nur eine ungenügende Lagerstabilität sowie eine unzureichende Dispergierbarkeit auf.

So beschreibt EP 198343 A2 carbodiimidgruppenhaltige Polyisocyanate, die mit Hilfe von Sulfonatgruppen und gegebenenfalls Polyethergruppen wasserdispergierbar ausgerüstet werden. Als sulfonatgruppentragende Aufbaukomponenten werden alkoxylierte Sulfonate explizit offenbart und sulfonierte Diisocyanate, die speziell hergestellt werden müssen.

Weiterhin verweist EP 198343 A2 auf N-(ω-Aminoalkyl)-ω'-aminoalkylsulfonate gemäß der CA 928323 A1 als sulfonatgruppentragende Aufbaukomponenten.

EP 703255 A1 beschreibt ebenfalls wasserdispergierbare Polyisocyanate mit Sulfonatgruppen. Explizit offenbart werden Hydroxyalkylsulfonate zur Verbesserung der Wasserdispergierbarkeit, nicht jedoch Polyether.

WO 2004/101638 (= US 2006/211815) beschreibt selbstemulgierende Polyurethandispersionen, die Polyethylenoxidketten tragen und weitere ionische dispergieraktive Gruppen tragen können.

EP 1287052 B1 offenbart Polyisocyanate, die mit 2-(Cyclohexylamino)ethansulfonsäure oder 3-(Cyclohexylamino)propansulfonsäure wasserdispergierbar ausgestaltet sind. Optional können Polyethergruppen als Aufbaukomponenten anwesend sein.

Derartige wasserdispergierbare Polyisocyanate zeigen eine unbefriedigende Trocknungszeit.

EP 1704928 A2 beschreibt wäßrige Beschichtungsmassen, die neben einem Polyisocyanat als Vernetzer und einem Bindemittel noch nach Einbau wasserdispergierbar wirkende Aufbaukomponenten enthalten, deren reaktive Gruppe ausgewählt sein kann aus der Gruppe bestehend aus primären und sekundären Aminogruppen und deren dispergierend wirkende Gruppen ausgewählt sein können aus der Gruppe bestehend aus Sulfonsäure- und Phosphonsäuregruppen.

Als Beispiele werden eine Vielzahl von aliphatischen und aromatischen Sulfon- und Phosphonsäuren mit einer oder mehreren gegenüber Isocyanat reaktiven Gruppen aufgeführt.

Die aufgeführten Verbindungen zeigen jedoch eine nicht-ausreichende Dispergierbarkeit und Trocknung (siehe Vergleichsbeispiele).

Die Aufgabe der vorliegenden Erfindung bestand darin, wasserdispergierbare Polyisocyanate zur Verfügung zu stellen, die sowohl eine gute Einarbeitbarkeit als auch gute Trocknungseigenschaften aufweisen.

Die Aufgabe wurde gelöst durch wasserdispergierbare Polyisocyanate (A), enthaltend als Aufbaukomponenten
(a) mindestens ein Di- oder Polyisocyanat,
(b) mindestens eine substituierte aromatische Sulfonsäure, die genau eine primäre oder sekundäre, bevorzugt primäre Aminogruppe trägt, wobei die Positionen am aromatischen Ring in ortho-Stellung zur Aminogruppe unsubstituiert sind,
(c) mindestens ein monofunktionelles Polyalkylenglykol,
(d) optional mindestens ein höhermolekulares Di- oder Polyol und
(e) optional mindestens ein niedermolekulares Di- oder Polyol.

Derartige erfindungsgemäße Polyisocyanate (A) weisen sowohl eine gute Einarbeitbarkeit in wäßrige Polyollösungen als auch gute Trocknungseigenschaften auf. Zudem ergeben sie Beschichtungen mit guter Härte, die sich beispielsweise in einem guten Glanz zeigt.

Bei der Aufbaukomponente (a) handelt es sich um mindestens ein, beispielsweise ein bis drei, bevorzugt ein bis zwei und besonders bevorzugt genau ein Di- oder Polyisocyanat.

Die eingesetzten monomeren Isocyanate können aromatisch, aliphatisch oder cycloaliphatisch sein, bevorzugt aliphatisch oder cycloaliphatisch, was in dieser Schrift kurz als (cyclo)aliphatisch bezeichnet wird. Besonders bevorzugt sind aliphatische Isocyanate.

Aromatische Isocyanate sind solche, die mindestens ein aromatisches Ringsystem enthalten, also sowohl rein aromatische wie auch araliphatische Verbindungen.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Bei den monomeren Isocyanaten handelt es sich bevorzugt um Diisocyanate, die genau zwei Isocyanatgruppen tragen. Es kann sich aber prinzipiell auch um Monoisocyanate mit einer Isocyanatgruppe handeln.

Es kommen prinzipiell auch höhere Isocyanate mit im Mittel mehr als 2 Isocyanatgruppen in betracht. Dafür eignen sich beispielsweise Triisocyanate wie Triisocyanatononan, 2,6-Diisocyanato-1-hexansäure-2'-isocyanatoethylester, 2,4,6-Triisocyanatotoluol, Triphenylmethantriisocyanat oder 2,4,4'-Triisocyanatodiphenylether oder die Gemische aus Di-, Tri- und höheren Polyisocyanaten, die beispielsweise durch Phosgenierung von entsprechenden Anilin/Formaldehyd-Kondensaten erhalten werden und Methylenbrücken aufweisende Polyphenylpolyisocyanate und die korrespondierenden kernhydrierten Isocyanate darstellen.

Diese monomeren Isocyanate weisen keine wesentlichen Umsetzungsprodukte der Isocyanatgruppen mit sich selbst auf.

Bei den monomeren Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates (z.B. Lysinmethylesterdiisocyanat, Lysinethylesterdiisocyanat), Trimethylhexandiisocyanat oder Tetramethylhexandiisocyanat, cycloaliphatische Diisocyanate wie 1,4-, 1,3-oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-Isomerengemische, sowie aromatische Diisocyanate wie 2,4- oder 2,6-Toluylendiisocyanat und deren Isomerengemische, m- oder p-Xylylendiisocyanat, 2,4'- oder 4,4'-Diisoeyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldi-phenylmethan-4,4'-diisocyanat, Tetramethylxylylendiisocyanat, 1,4-Diisocyanatobenzol oder Diphenylether-4,4'-diisocyanat.

Besonders bevorzugt sind 1,6-Hexamethylendiisocyanat, 1,3-Bis(isocyanatomethyl)cyclo-hexan, Isophorondiisocyanat und 4,4'- oder 2,4'-Di(isocyanatocyclohexyl)methan, ganz besonders bevorzugt sind Isophorondiisocyanat und 1,6-Hexamethylendiisocyanat, insbesondere bevorzugt ist 1,6-Hexamethylendiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 80:20 (w/w), bevorzugt im Verhältnis von ca. 70:30 bis 75:25 und besonders bevorzugt im Verhältnis von ca. 75:25.

Dicyclohexylmethan-4,4'-diisocyanat kann ebenfalls als Gemisch der verschiedenen cis- und trans-Isomere vorliegen.

Für die vorliegende Erfindung können sowohl solche Diisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethylcyclohexan (Isophorondiisocyanat bzw. IPDI) hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und gegebenenfalls in Gegenwart von N-unsubstituierten Carbaminsäureestem, Dialkylcarbonaten und anderen aus dem Reaktionsprozeß zurückgeführten Nebenprodukten. So erhaltene Diisocyanate weisen in der Regel einen sehr geringen oder sogar nicht meßbaren Anteil an chlorierten Verbindungen auf, was beispielsweise in Anwendungen in der Elektronikindustrie vorteilhaft ist.

In einer Ausführungsform der vorliegenden Erfindung weisen die eingesetzten Isocyanate einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch monomere Isocyanate mit einem höheren Chlorgehalt eingesetzt werden, beispielsweise bis zu 500 ppm.

Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Die Polyisocyanate (a), zu denen die monomeren Isocyanate oligomerisiert werden können, sind in der Regel wie folgt charakterisiert:
Die mittlere NCO Funktionalität solcher Verbindungen beträgt in der Regel mindestens 1,8 und kann bis zu 8 betragen, bevorzugt 2 bis 5 und besonders bevorzugt 2,4 bis 4.
Der Gehalt an Isocyanatgruppen nach der Oligomerisierung, berechnet als NCO = 42 g/mol, beträgt, wenn nicht anders angegeben, in der Regel von 5 bis 25 Gew%.

Bevorzugt handelt es sich bei den Polyisocyanaten (a) um folgende Verbindungen:
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 8.
2) Uretdiongruppen aufweisende Polyisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiongruppen aufweisenden Polyisocyanate werden im Rahmen dieser Erfindung im Gemisch mit anderen Polyisocyanaten, insbesondere den unter 1) genannten, erhalten. Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppen-haltigen Produkten umgesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 2,8 bis 6 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen (a). Diese Urethan- und/oder Allophanatgruppen aufweisenden Polyisocyanate haben im allgemeinen einen NCO-Gehalt von 12 bis 24 Gew.-% und eine mittlere NCO-Funktionalität von 2,1 bis 4,5. Solche Urethan- und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Zn-(II)-Verbindungen, jeweils in Anwesenheit von ein-, zwei- oder mehrwertigen, bevorzugt einwertigen Alkoholen, hergestellt werden. Die Urethan- und/oder Allophanatgruppen aufweisenden Polyisocyanate können auch im Gemisch mit anderen Polyisocyanaten, insbesondere den unter 1) genannten, hergestellt werden.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder Isophorondiisocyanat abgeleitet. Solche Iminooxadiazin-diongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-Polyisocyanat-Präpolymere, aus Di- und/oder Polyisocyanaten mit Alkoholen.
11) Polyharnstoff Polyisocyanat-Präpolymere.
12) Die Polyisocyanate 1)-11), bevorzugt 1), 3), 4) und 6) können nach deren Herstellung in Biuretgruppen- oder Urethan-/Allophanat-Gruppen aufweisende Polyisocyanate mit aromatisch, cycloaliphatisch oder aliphatisch gebundenen, bevorzugt (cyclo)aliphatisch gebundenen Isocyanatgruppen, überführt werden. Die Bildung von Biuretgruppen erfolgt beispielsweise durch Zugabe von Wasser, Wasser freisetzenden Verbindungen (z.B. tert.-Butanol) oder durch Umsetzung mit Aminen. Die Bildung von Urethan- und/oder Allophanatgruppen erfolgt durch Umsetzung mit ein-, zwei- oder mehrwertigen, bevorzugt einwertigen Alkoholen, gegebenenfalls in Gegenwart von geeigneten Katalysatoren. Diese Biuret- oder Urethan-/Allophanatgruppen aufweisenden Polyisocyanate weisen im allgemeinen einen NCO-Gehalt von 18 bis 22 Gew.-% und eine mittlere NCO-Funktionalität von 2,8 bis 6 auf.
13) Hydrophil modifizierte Polyisocyanate, d.h. Polyisocyanate, die neben den unter 1-12 beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei letzteren handelt es sich um nichtionische Gruppen wie Alkyl-Polyethylenoxid und/oder ionische, welche von Phosphorsäure, Phosphonsäure, Schwefelsäure oder Sulfonsäure, bzw. ihren Salzen abgeleitet sind.
14) Modifizierte Polyisocyanate für Dual Cure Anwendungen, d.h. Polyisocyanate, die neben den unter 1-12 beschriebenen Gruppen solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Moleküle handelt es sich beispielsweise um Hydroxyallkyl(meth)acrylate und andere Hydroxy-Vinylverbindungen.

Die oben aufgeführten Diisocyanate oder Polyisocyanate können auch zumindest teilweise in blockierter Form vorliegen.

Zur Blockierung eingesetzte Verbindungsklassen sind beschrieben in D. A. Wicks, Z. W. Wicks, Progress in Organic Coatings, 36, 148-172 (1999), 41, 1-83 (2001) sowie 43, 131-140 (2001).

Beispiele für zur Blockierung eingesetzte Verbindungsklassen sind Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate.

In einer bevorzugten Ausführungsform der vorliegenden Erfindung ist das Polyisocyanat (a) ausgewählt aus der Gruppe bestehend aus Isocyanuraten, Biureten, Urethanen und Allophanaten, bevorzugt aus der Gruppe bestehend aus Isocyanuraten, Urethanen und Allophanaten, besonders bevorzugt aus der Gruppe bestehend aus Isocyanuraten und Allophanaten, insbesondere handelt es sich um ein isocyanuratgruppenhaltiges Polyisocyanat.

In einer besonders bevorzugten Ausführungsform handelt es sich bei dem Polyisocyanat (a) um Isocyanuratgruppen enthaltende Polyisocyanate von 1,6-Hexamethylendüsocyanat.

In einer weiteren besonders bevorzugten Ausführungsform handelt es sich bei dem Polyisocyanat (a) um ein Gemisch von Isocyanuratgruppen enthaltenden Polyisocyanaten von 1,6-Hexamethylendiisocyanat und von Isophorondüsocyanat.

In einer besonders bevorzugten Ausführungsform handelt es sich bei dem Polyisocyanat (a) um ein Gemisch enthaltend niedrigviskose Polysiocyanate, bevorzugt Isocyanuratgruppen enthaltende Polyisocyanate, mit einer Viskosität von 600-1500 mPa*s, insbesondere unter 1200 mPa*s, niederviskose Urethane und/oder Allophanate mit einer Viskosität von 200-1600 mPa*s, insbesondere 600-1500 mPa*s, und/oder Iminooxadiazindiongruppen enthaltende Polyisocyanate.

In dieser Schrift wird die Viskosität bei 23 °C gemäß DIN EN ISO 3219/A.3 in einem Kegel-Platte-System mit einem Geschwindigkeitsgefälle von 250 s⁻¹ angegeben, falls nicht anders vermerkt.

Bei der Aufbaukomponente (b) handelt es sich um mindestens eine, beispielsweise ein bis drei, bevorzugt ein bis zwei und besonders bevorzugt genau eine substituierte aromatische Sulfonsäure, die genau eine primäre oder sekundäre, bevorzugt primäre Aminogruppe trägt, wobei die Positionen am aromatischen Ring in ortho-Stellung zur Aminogruppe unsubstituiert sind.

Diese Aufbaukomponenten (b) können mindestens eine, beispielsweise ein bis drei, bevorzugt ein bis zwei und besonders bevorzugt genau eine Sulfonsäuregruppe tragen.

Bevorzugt sind solche substituierten aromatischen Sulfonsäuren der Formel (I) 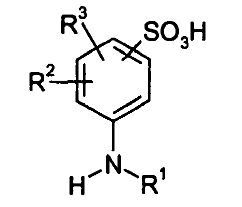 worin
R¹, R² und R³ unabhängig voneinander Wasserstoff, Alkyl, Cycloalkyl oder Aryl, wobei die genannten Reste jeweils durch Aryl, Alkyl, Aryloxy, Alkyloxy, Heteroatome und/oder Heterocyclen substituiert sein können, bedeuten,
wobei R² und R³ auch zusammen einen Ring, bevorzugt einen annellierten aromatischen Ring ausbilden können,
mit der Maßgabe, daß-mindestens-einer-der Reste R² und R³ ungleich Wasserstoff ist.

Darin bedeuten
gegebenenfalls durch Aryl, Alkyl, Aryloxy, Alkyloxy, Heteroatome und/oder Heterocyclen substituiertes C₁-C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl,1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenylthioethyl, 2,2,2-Trifluorethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl,
gegebenenfalls durch Aryl, Alkyl, Aryloxy, Alkyloxy, Heteroatome und/oder Heterocyclen substituiertes C₆-C₁₂-Aryl beispielsweise Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, isoPropylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, E-thoxynaphthyl, 2,6-Dimethylphenyl, 2,4,6-Trimethylphenyl, 2,6-Dimethoxyphenyl, 2,6-Dichlorphenyl, 4-bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl, und
gegebenenfalls durch Aryl, Alkyl, Aryloxy, Alkyloxy, Heteroatome und/oder Heterocyclen substituiertes C₅-C₁₂-Cycloalkyl beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyt, Dichlorcyclohexyl, Dichlorcyclopentyl sowie ein gesättigtes oder ungesättigtes bicyclisches System wie z.B. Norbornyl oder Norbornenyl.

Bevorzugt kann es sich bei R¹ um Wasserstoff, unsubstituiertes Alkyl oder unsubstituiertes Cycloalkyl handeln, besonders bevorzugt um Wasserstoff, Methyl, Ethyl, n-Propyl, iso-Propyl, tert-Butyl, Cyclopentyl und Cyclohexyl, ganz besonders bevorzugt um Wasserstoff und Methyl und insbesondere um Wasserstoff.

Bevorzugt kann es sich bei R² und R³ unabhängig voneinander um Wasserstoff, unsubstituiertes Alkyl oder unsubstituiertes Aryl handeln, besonders bevorzugt um Wasserstoff, Methyl, Ethyl, iso-Propyl, tert-Butyl, Hexyl, Octyl, Nonyl, Decyl, Dodecyl, Phenyl oder Naphthyl, ganz besonders bevorzugt um Wasserstoff, Methyl, Ethyl, iso-Propyl, Phenyl und insbesondere um Wasserstoff und Methyl.

Bilden R² und R³ gemeinsam einen Ring, so können R² und R³ eine Butyl-1,4-ylenkette oder bevorzugt eine 1,3-Butadien-1,4-ylenkette bilden, so daß sich als aromatischer Ring ein Tetrahydronaphthalin bzw. Naphthalinring bildet.

Bevorzugt ist einer der Reste R² und R³ Wasserstoff und der andere ungleich Wasserstoff.

Die Sulfonsäuregruppe befindet sich in para- oder meta-Stellung relativ zur primären oder sekundären Aminogruppe am aromatischen Ring, bevorzugt in meta-Stellung.

Die Substituenten R² und R³ befinden sich ebenfalls in para- oder meta-Stellung relativ zur primären oder sekundären Aminogruppe am aromatischen Ring, abhängig von der Stellung der Sulfonsäuregruppe. Für den bevorzugten Fall, daß einer der Reste R² und R³ Wasserstoff und der andere ungleich Wasserstoff ist, befindet sich derjenige der Reste, der ungleich Wasserstoff ist, bevorzugt in para-Position am aromatischen Ring relativ zur primären oder sekundären Aminogruppe.

Somit stellt es eine bevorzugte Ausführungsform der Erfindung dar, daß sich die Sulfonsäuregruppe Position 4 relativ zur primären oder sekundären Aminogruppe am aromatischen Ring befindet und derjenige der Reste R² und R³, der ungleich Wasserstoff ist, Position 3 relativ zur primären oder sekundären Aminogruppe.

Eine weitere bevorzugte Ausführungsform der Erfindung stellt es dar, daß sich die Sulfonsäuregruppe Position 3 relativ zur primären oder sekundären Aminogruppe am aromatischen Ring befindet und derjenige der Reste R² und R³, der ungleich Wasserstoff ist, Position 5 relativ zur primären oder sekundären Aminogruppe.

Eine besonders bevorzugte Ausführungsform der Erfindung stellt es dar, daß sich die Sulfonsäuregruppe Position 3 relativ zur primären oder sekundären Aminogruppe am aromatischen Ring befindet und derjenige der Reste R² und R³, der ungleich Wasserstoff ist, Position 4 relativ zur primären oder sekundären Aminogruppe.

Die beiden ortho-Positionen beiderseits der primären oder sekundären Aminogruppe am aromatischen Ring sind erfindungsgemäß unsubstituiert.

Bevorzugt handelt es sich bei den Verbindungen (b) um 4-Aminotoluol-2-sulfonsäure, 5-Aminotoluol-2-sulfonsäure oder 2-Aminonaphthalin-4-sulfonsäure, besonders bevorzugt um 4-Aminotoluol-2-sulfonsäure.

Bei der Komponente (c) handelt es sich um monofunktionelle Polyalkylenoxidpolyetheralkohole, die Umsetzungsprodukte von geeigneten Startermolekülen mit Polyalkylenoxiden sind.

Geeignete Startermoleküle zur Herstellung einwertiger Polyalkylenoxidpolyetheralkohole sind Thiolverbindungen, Monohydroxyverbindungen der allgemeinen Formel

R⁴-O-H

oder sekundäre Monoamine der allgemeinen Formel

R⁵R⁶N-H,

in welchen
R⁴, R⁵ und R⁶ unabhängig voneinander jeweils C₁-C₂₀-Alkyl, gegebenenfalls durch ein oder mehrere Sauerstoff- und/oder Schwefelatome und/oder ein oder mehrere substituierte oder unsubstituierte Iminogruppen unterbrochenes C₂-C₂₀-Alkyl, C₆-C₁₂-Aryl, C₅-C₁₂-Cycloalkyl oder einen fünf- bis sechsgliedrigen, Sauerstoff- , Stickstoff- und/oder Schwefelatome aufweisenden Heterocyclus bedeuten oder R⁵ und R⁶ gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.

Bevorzugt sind R⁴, R⁵ und R⁶ unabhängig voneinander C₁- bis C₄-Alkyl, d.h. Methyl, Ethyl, iso-Propyl, n-Propyl, n-Butyl, iso-Butyl, sek-Butyl oder tert-Butyl, besonders bevorzugt sind R⁴, R⁵ und R⁶ Methyl.

Beispielsweise geeignete einwertige Startermoleküle sind gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, Cyclopentanol, die isomeren Methylcyclohexanole oder Hydroxymethylcyclohexan, 3-Ethyl-3-hydroxy-methyloxetan, oder Tetrahydrofurfurylalkohol; ungesättigte Alkohole wie Allylalkohol, 1,1-Dimethyl-allylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Di-n-butylamin, Diisobutylamin, Bis-(2-ethylhexyl)-amin, N-Methyl- und N-Ethylcyclohexylamin oder Dicyclohexylamin, heterocylische sekundäre Amine wie Morpholin, Pyrrolidin, Piperidin oder 1H-Pyrazol, sowie Aminoalkohole wie 2-Dimethylaminoethanol, 2-Diethylaminoethanol, 2-Diisopropylaminoethanol, 2-Dibutylaminoethanol, 3-(Dimethylamino)-1-propanol oder 1-(Dimethylamino)-2-propanol.

Beispiele für die auf Aminen gestarteten Polyether sind die sogenannten Jeffamine® M-Serien, die methylgekappte Polyalkylenoxide mit einer Aminofunktion darstellen, wie M-600 (XTJ-505), mit einem Propylenoxid (PO)/Ethylenoxid (EO)-Verhältnis von ca. 9:1 und einer Molmasse von ca. 600, M-1000 (XTJ-506): PO/EO-Verhältnis 3:19, Molmasse ca. 1000, M-2005 (XTJ-507): PO/EO-Verhältnis 29:6, Molmasse ca. 2000 oder M-2070: PO/EO-Verhältnis 10:31, Molmasse ca. 2000.

Für die Alkoxylierungsreaktion geeignete Alkylenoxide sind Ethylenoxid, Propylenoxid, iso-Butylenoxid, Vinyloxiran und/oder Styroloxid, die in beliebiger Reihenfolge oder auch im Gemisch bei der Alkoxylierungsreaktion eingesetzt werden können.

Bevorzugte Alkylenoxide sind Ethylenoxid, Propylenoxid und deren Gemische, besonders bevorzugt ist Ethylenoxid.

Bevorzugte Polyetheralkohole sind solche auf Basis von Polyalkylenoxidpolyetheralkoholen, bei deren Herstellung gesättigte aliphatische oder cycloaliphatische Alkohole der oben genannten Art als Startermoleküle eingesetzt wurden. Ganz besonders bevorzugt sind solche auf Basis von Polyalkylenoxidpolyetheralkoholen, die unter Verwendung von gesättigten aliphatischen Alkoholen mit 1 bis 4 Kohlenstoffatomen im Alkylrest hergestellt wurden. Insbesondere bevorzugt sind auf Methanol gestartete Polyalkylenoxidpolyetheralkohole.

Die einwertigen Polyalkylenoxidpolyetheralkohole weisen im statistischen Mittel in der Regel mindestens 2 Alkylenoxideinheiten, bevorzugt mindestens 5 Alkylenoxideinheiten, pro Molekül auf, besonders bevorzugt mindestens 7 und ganz besonders bevorzugt mindestens 10 Alkylenoxideinheiten, insbesondere Ethylenoxideinheiten.

Die einwertigen Polyalkylenoxidpolyetheralkohole weisen im statistischen Mittel in der Regel bis zu 50 Alkylenoxideinheiten pro Molekül auf, bevorzugt bis zu 45, besonders bevorzugt bis zu 40 und ganz besonders bevorzugt bis zu 30 Alkylenoxideinheiten, insbesondere Ethylenoxideinheiten.

Das Molgewicht der einwertigen Polyalkylenoxidpolyetheralkohole beträgt bevorzugt bis zu 4000, besonders bevorzugt nicht über 2000 g/mol, ganz besonders bevorzugt nicht unter 250 und insbesondere 500 ± 100 g/mol.

Bevorzugte Polyetheralkohole sind somit Verbindungen der Formel

R⁴-O-[-Xᵢ]ₖ-H

worin
R⁴ die oben genannten Bedeutungen hat,
k für eine ganze Zahl von 5 bis 40, bevorzugt 7 bis 20 und besonders bevorzugt 10 bis 15 steht und
jedes Xᵢ für i = 1 bis k unabhängig voneinander ausgewählt sein kann aus der Gruppe -CH₂-CH₂-O-, -CHrCH(CH₃)-O-, -CH(CH₃)-CH₂-O-, -CH₂-C(CH₃)₂-O-, -C(CH₃)rCH2-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-
worin Ph für Phenyl und Vin für Vinyl steht.

Die Herstellung der Polyalkylenoxidpolyetheralkohole erfolgt in der Regel durch Alkoxylierung der Startverbindungen in Gegenwart eine Katalysators, beispielsweise eines Alkali- oder Erdalkalihydroxids, -oxids, -carbonats oder-hydrogencarbonats.

Die Herstellung der Polyalkylenoxidpolyetheralkohole kann auch mit Hilfe von Multimetallcyanidverbindungen, häufig auch als DMC-Katalysatoren bezeichnet, erfolgen, die seit langem bekannt und vielfach in der Literatur beschrieben sind, beispielsweise in US 3,278,457 und in US 5,783,513.

Die DMC-Katalysatoren werden üblicherweise hergestellt, indem ein Metallsalz mit einer Cyanometallatverbindung umgesetzt wird. Zur Verbesserung der Eigenschaften der DMC-Katalysatoren ist es üblich, während und/oder nach der Umsetzung organische Liganden zuzusetzen. Eine Beschreibung der Herstellung von DMC-Katalysatoren findet sich beispielsweise in US-A 3,278,457.

Typische DMC-Katalysatoren weisen die folgende allgemeine Formel auf:

M¹ₐ[M²(CN)_{b}]_{d} • fM¹ⱼXₖ • h(H₂O) eL • zP

worin
M¹ ein Metallion, ausgewählt aus der Gruppe, enthaltend Zn²⁺, Fe²⁺, Fe³⁺, Co²⁺, Co³⁺, Ni²⁺, Mn²⁺, Sn²⁺, Sn⁴⁺, Pb²⁺, Al³⁺, Sr²⁺, Cr³⁺, Cd²⁺, Cu²⁺, La³⁺, Ce³⁺, Ce⁴⁺, Eu³⁺, Mg²⁺, Ti⁴⁺, Ag⁺, Rh²⁺, Ru²⁺, Ru³⁺, Pd²⁺
M² ein Metallion, ausgewählt aus der Gruppe, enthaltend Fe²⁺, Fe³⁺, Co²⁺, Co³⁺, Man²⁺, Man³⁺, Ni²⁺, Cr²⁺, Cr³⁺, Rh³⁺, Ru²⁺, Ir³⁺
bedeuten und M¹ und M² gleich oder verschieden sind,
X ein Anion, ausgewählt aus der Gruppe, enthaltend Halogenid, Hydroxid, Sulfat, Hydrogensulfat, Carbonat, Hydrogencarbonat, Cyanid, Thiocyanat, Isocyanat, Cyanat, Carboxylat, Oxalat, Nitrat oder Nitrit (NO₂⁻) oder eine Mischung von zwei oder mehr der voranstehend genannten Anionen oder eine Mischung von einem oder mehreren der voranstehend genannten Anionen mit einer der ungeladenen Spezies ausgewählt aus CO, H₂O und NO,
Y ein von X verschiedenes Anion, ausgewählt aus der Gruppe, enthaltend, Halogenid, Sulfat, Hydrogensulfat, Disulfat, Sulfit, Sulfonat (=RSO₃⁻ mit R=C1-C20-Alkyl, Aryl, C1-C20-Alkylaryl), Carbonat, Hydrogencarbonat, Cyanid, Thiocyanat, Isocyanat, Isothiocyanat, Cyanat, Carboxylat, Oxalat, Nitrat, Nitrit, Phosphat, Hydrogenphosphat, Dihydrogenphosphat, Diphosphat, Borat, Tetraborat, Perchlorat, Tetrafluoroborat, Hexafluorophosphat, Tetraphenylborat ist,
L ein mit Wasser mischbarer Ligand, ausgewählt aus der Gruppe, enthaltend Alkohole Aldehyde, Ketone, Ether, Polyether, Ester, Polyester, Polycarbonat, Harnstoffe, Amide, Nitrile, und Sulfide oder deren Mischungen,
P ein organischer Zusatzstoff, ausgewählt aus der Gruppe, enthaltend Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylamid-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure und Maleinsäureanhydridcopolymer, Hydroxyethylcellulose, Polyacetate, ionische oberflächen und grenzflächenaktive Verbindungen,-Gallensäure oder deren Salze, Ester oder Amide, Carbonsäureester mehrwertiger Alkohole und Glycoside.
sowie
a, b, d, g, n, r, s, j, k und t ganze oder gebrochene Zahlen größer null,
e, f, h und z ganze oder gebrochene Zahlen größer gleich null sind,
wobei
a, b, d, g, n, j, k und r sowie s und t so ausgewählt sind, dass die Elektroneutralität gewährleistet ist,
M³ Wasserstoff oder ein Alkali- oder Erdalkalimetall bedeuten, sowie
M⁴ Alkalimetallionen oder ein Ammoniumion (NH₄⁺) oder Alkylammoniumion (R₄N⁺, R₃NH⁺, R₂NH₂⁺, RNH₃⁺ mit R= C1-C20-Alkyl) bedeuten.

In einer besonders bevorzugten Ausführungsform der Erfindung ist M¹ Zn²⁺ und M² Co³⁺ oder Co²⁺.

Die Metalle M¹ und M² sind insbesondere dann gleich, wenn sie Kobalt, Mangan oder Eisen sind.

Die Reste des Katalysators können im erhaltenen Produkt verbleiben, oder mit einer Säure, bevorzugt Salzsäure, Schwefelsäure oder Essigsäure, neutralisiert werden, wobei die Salze anschließend bevorzugt durch beispielsweise eine Wäsche oder per Ionentauscher entfernt werden können. Gegebenenfalls kann eine Teilneutralisation erfolgen und das Produkt ohne weitere Abtrennung der Salze weiterverwendet werden.

Bei der optionalen Aufbaukomponente (d) handelt es sich um höhermolekulare Di- oder Polyole, worunter ein zahlenmittleres Molekulargewicht von mindestens 400, bevorzugt 400 bis 6000 verstanden wird.

Insbesondere handelt es sich dabei um zwei- oder mehrwertige Polyesterpolyole und Polyetherpolyole, wobei die zweiwertigen bevorzugt sind.

Als Polyesterpolyole kommen vor allem die an sich bekannten Umsetzungsprodukte von mehrwertigen Alkoholen mit mehrbasischen Carbonsäuren in Betracht, wobei die alkoholische Komponente im Überschuß eingesetzt wird. Die mehrbasischen Carbonsäuren können aliphatischer, cycloaliphatischer, aromatischer, heterocyclischer oder ethylenisch ungesättigter Natur sein sowie gegebenenfalls Halogenatome als Substituenten tragen. Anstelle der mehrbasischen Carbonsäuren können auch deren Anhydride verestert werden. Als Beispiele für geeignete mehrbasische Ausgangscarbonsäuren seien genannt: Bernsteinsäure, Adipinsäure, Sebacinsäure, Phthalsäure, Isophthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid oder Fumarsäure.

Als im Überschuss einzusetzende mehrwertige Alkohole seien genannt: Ethandiol-(1,2), Propandiol-(1,2), Propandiol-(1,3), Butandiol-(1,2), Butandiol-(1,3), Butandiol-(1,4), Butendiol-(1,4), Butindiol-(1,4), Pentandiol-(1,5) und seine Stellungsisomeren, Hexandiol-(1,6), Octandiol-(1,8), 1,4-Bishydroxymethylcyclohexan, 2,2-Bis-(4-hydroxycyclohexyl)propan, 2-Methyl-1,3-propandiol, Glycerin, Trimethylolpropan, Trimethylolethan, Hexantriol-(1,2,6), Butantriol-(1,2,4), Diethylenglycol, Triethylenglycol, Tetraethylenglycol, Polyethylenglycol mit einer Molmasse von 378 bis 900, bevorzugt von 378 bis 678, Poly-1,2-propylenglycol oder Poly-1,3-propandiol mit einer Molmasse von 134 bis 1178, bevorzugt 134 bis 888, Poly-THF mit einer Molmasse von 162 bis 2000, bevorzugt zwischen 378 und 1458, besonders bevorzugt 378 bis 678.

Bevorzugt sind Polyesterpolyole aus Diolen und Dicarbonsäuren.

Ferner eignen sich als Polyesterpolyole die Anlagerungsprodukte von Lactonen bzw. Lactongemischen an als Startermoleküle eingesetzte zweiwertige Alkohole. Beispiele für bevorzugte Lactone sind ε-Caprolacton, β-Propiolacton, γ-Butyrolacton oder Methyl-ε-caprolacton.

Geeignete Startermoleküle sind insbesondere die bereits als Aufbaukomponenten für die Polyesterpolyole genannten niedermolekularen zweiwertigen Alkohole.

Selbstverständlich eignen sich auch Polyester aus Hydroxycarbonsäuren als Aufbaukomponenten. Ferner sind auch Polycarbonate, wie sie z. B. aus Phosgen oder Diphenylcarbonat und den als Aufbaukomponenten für die Polyesterpolyole genannten niedermolekularen zweiwertigen Alkoholen im Überschuss erhältlich sind, als Polyester geeignete Aufbaukomponenten (d).

Als Polyetherpolyole geeignete Aufbaukomponenten (d) kommen vorzugsweise Polyetherdiole in Betracht, wie sie z. B. durch Bortrifluorid katalysierte Verknüpfung von Ethylenoxid, Propylenoxid, Butylenoxid, Tetrahydrofuran, Styroloxid oder Epichlorhydrin mit sich selbst oder untereinander, oder durch Anlagerung dieser Verbindungen, einzeln oder im Gemisch, an Starterkomponenten mit reaktionsfähigen Wasserstoffatomen wie Wasser, mehrwertigen Alkoholen oder Aminen wie Ethandiol-(1,2), Propandiol-(1,3), 1,2- oder 2,2-Bis-(4-hydroxyphenyl)propan oder Anilin erhältlich sind, in Betracht. Weiterhin sind Polether-1,3-diole, z. B. das an einer OH-Gruppe alkoxylierte Trimethylolpropan, dessen Alkylenoxidkette mit einem 1 bis 18 C-Atome enthaltenden Alkylrest abgeschlossen ist, vorzugsweise eingesetzte Aufbaukomponenten (d).

Optionale Aufbaukomponenten (e) können niedermolekulare zwei- oder mehrwertige Alkohole sein, unter denen die zweiwertigen bevorzugt sind. Niedermolekular bedeutet hier ein zahlenmittleres Molekulargewicht von 62 bis 399.

Als Aufbaukomponenten (e) kommen Ethandiol-(1,2), Propandiol-(1,2), Propandiol-(1,3), Butandiol-(1,2), Butandiol-(1,3), Butandiol-(1,4), Butendiol-(1,4), Butindiol-(1,4), Pentandiol-(1,5) und seine Stellungsisomeren, Hexandiol-(1,6), Octandiol-(1,8), 1,4-Bishydroxymethylcyclohexan, 2,2-Bis-(4-hydroxycyclohexyl)propan, 2-Methyl-1,3-propandiol, Glycerin, Trimethylolpropan, Trimethylolethan, Hexantriol-(1,2,6), Butantriol-(1,2,4), Diethylenglycol, Triethylenglycol, Tetraethylenglycol, niedermolekulares Polyethylenglycol Poly-1,2-propylenglycol, Poly-1,3-propandiol oder Poly-THF in Betracht, sowie mehrwertige Alkohole wie Trimethylolbutan, Trimethylolpropan, Trimethylolethan, Neopentylglykol, Hydroxypivalinsäureneopentylglykolester, Pentaerythrit, 2-Ethyl-1,3-Propandiol, 2-Methyl-1,3-Propandiol, 2-Ethyl-1,3-Hexandiol, Glycerin, Ditrimethylolpropan, Dipentaerythrit, Hydrochinon, Bisphenol A, Bisphenol F, Bisphenol B, Bisphenol S, 2,2-Bis(4-hydroxycyclohexyl)propan, 1,1-, 1,2-, 1,3- und 1,4-Cyclohexandimethanol, 1,2-, 1,3- oder 1,4-Cyclohexandiol oder Zuckeralkohole wie Sorbit, Mannit, Diglycerol, Threit, Erythrit, Adonit (Ribit), Arabit (Lyxit), Xylit, Dulcit (Galactit), Maltit oder Isomalt in Betracht. Vorzugsweise werden lineare 1,ω-Dihydroxyalkane, besonders bevorzugt Butandiol-(1,4) und Hexandiol-(1,6) eingesetzt.

Die Polyisocyanate (A) sind in der Regel wie folgt aufgebaut, bezogen auf Isocyanatgruppen (berechnet als NCO mit einem Molekulargewicht von 42 g/mol) in Aufbaukomponente (a)
(b) 0,5 bis 30 mol% primäre oder sekundäre Aminogruppen, bevorzugt 0,8 bis 25 mol% und besonders bevorzugt 1,0 bis 20 mol%,
(c) mindestens 0,3 mol%, bevorzugt mindestens 0,5, besonders bevorzugt mindestens 1,0 und ganz besonders bevorzugt mindestens 1,2 mol% sowie bis zu 25 mol%, bevorzugt bis 20, besonders bevorzugt bis 15 und ganz besonders bevorzugt bis 10 mol% bezogen auf gegenüber Isocyanat reaktive Gruppen in (c),
(d) 0 bis 15 mol%, bevorzugt 0 bis 10 mol%, besonders bevorzugt 0 bis 5 mol% und ganz besonders bevorzugt 0 mol% bezogen auf gegenüber Isocyanat reaktive Gruppen in (d), und
(e) 0 bis 15 mol%, bevorzugt 0 bis 10 mol%, besonders bevorzugt 0 bis 5 mol% und
ganz besonders bevorzugt 0 mol% bezogen auf gegenüber Isocyanat reaktive Gruppen in (e).

Der NCO-Gehalt der erfindungsgemäßen Polyisocyanate (A) beträgt in der Regel 13 Gew% oder mehr, bevorzugt 14 Gew% oder mehr, besonders bevorzugt 15 Gew% oder mehr und ganz besonders bevorzugt 16 Gew% oder mehr bei gleichzeitig sehr guter Wasserdispergierbarkeit. Zumeist werden 22 Gew% nicht überschritten.

Der Gehalt an in das Polylsocyanat (A) eingebauten Sulfonatgruppen (berechnet als SO₃H mit einem M_{w} von 81,07 g/mol, potentiometrisch gemessen als Säurezahl gemäß DIN 53402) beträgt mindestens 1, bevorzugt mindestens 1,5, besonders bevorzugt mindestens 2 und ganz besonders bevorzugt mindestens 2,5 mg KOH/g und kann bis zu 200, bevorzugt bis zu 180, besonders bevorzugt bis zu 150 und ganz besonders bevorzugt bis zu 130 mg KOH/g betragen.

Bevorzugte Polyisocyanate (A) weisen einen Anteil der Struktureinheiten -[-CH₂-CH₂-O-]-, berechnet mit 44 g/mol, an der Summe der Komponenten a) + b) + c) + d) + e) von mindestens 1 Gew%, bevorzugt mindestens 1,5 Gew% und besonders bevorzugt mindestens 2 Gew% auf. In der Regel beträgt der Anteil nicht mehr als 20 Gew%, bevorzugt nicht mehr als 12 und besonders bevorzugt nicht mehr als 10 Gew%.

Das zahlenmittlere Molgewicht Mₙ (bestimmt per Gelpermeationschromatographie mit THF als Lösungsmittel und Polystyrol als Standard) der erfindungsgemäßen Polyisocyanate beträgt in der Regel von mindestens 400, bevorzugt mindestens 500, besonders bevorzugt mindestens 700 und ganz besonders bevorzugt mindestens 1000 und bis zu 5000, bevorzugt bis zu 3000, besonders bevorzugt bis zu 2000 und ganz besonders bevorzugt bis zu 1500.

In der Regel liegt die Viskosität der erfindungsgemäßen wasseremulgierbaren Polyisocyanate unter 10000 mPa*s, bevorzugt unter 9000 mPa*s, besonders bevorzugt unter 8000 mPa*s, ganz besonders bevorzugt unter 7000 mPa*s und insbesondere zwischen 800 und 6000 mPa*s, so daß eine Verdünnung mit Lösungsmittel nicht erforderlich ist.

Die erfindungsgemäßen Polyisocyanate (A) werden häufig mit mindestens einer Base (B) zumindest teilweise neutralisiert.

Dabei kann es sich um basische Alkalimetall-, Erdalkalimetall- oder Ammoniumsalze handeln, insbesondere die Natrium-, Kalium-, Cäsium-, Magnesium-, Calcium-, Bariumsalze, besonders Natrium- Kalium- und Calciumsalze in Form von Hydroxiden, Oxiden, Hydrogencarbonaten oder Carbonaten, bevorzugt in Form der Hydroxide.

Bevorzugte Verbindungen (B) sind jedoch Ammoniak oder Amine, bevorzugt tertiäre Amine. Bevorzugt handelt es sich dabei um tertiäre Amine, die ausschließlich alkyl- und/oder cycloalkylsubstituiert sind.

Beispiele dafür sind Trimethylamin, Triethylamin, Tri-n-butylamin, Ethyldiisopropylamin, Dimethylbenzylamin, Dimethylphenylamin, Triethanolamin, Cyclopentyldimethylamin, Cyclopentyldiethylamin, Cyclohexyldimethylamin und Cyclohexyldiethylamin.

Denkbar, wenn auch weniger bevorzugt, sind aber auch heterocyclische Amine, wie Pyridin, Imidazol, N-alkyliertes Morpholin, Piperidin, Piperazin oder Pyrrolidon.

In der Regel werden mit der Base (B) 10 bis 100 mol% der in (A) befindlichen Säuregruppen neutralisiert, bevorzugt 20 bis 100 mol%, besonders bevorzugt 40 bis 100 mol%, ganz besonders bevorzugt 50 bis 100 mol% und insbesondere 70 bis 100 mol%.

Die zumindest teilweise Neutralisierung der Komponente (b) im Polyisocyanat (A) kann vor, während oder nach der Herstellung des Polyisocyanats (A) erfolgen.

Die Herstellung der Polyisocyanate (A) erfolgt in der Regel durch Vermischung und Umsetzung der Aufbaukomponenten in beliebiger Reihenfolge. Bevorzugt wird das Di- oder Polyisocyanat (a) vorgelegt, die Aufbaukomponenten (b) und/oder (c) gemeinsam oder nacheinander zugegeben und bis zur Umsetzung der reaktiven Gruppen in (b) und (c) reagieren gelassen. Falls gewünscht können anschließend noch die Verbindungen (d) und/oder (e) zugegeben werden.

Denkbar ist auch eine Reaktionsführung, in der monomere Diisocyanate als Komponenten (a) in Gegenwart der Verbindungen (b) und/oder (c) miteinander umgesetzt werden. Eine derartige Reaktionsführung ist beschrieben in der unveröffentlichten Europäischen Patentanmeldung mit dem Aktenzeichen 07104873.0 und dem Anmeldetag 26.03.2007, auf die hiermit im Rahmen dieser Offenbarung vollständig Bezug genommen wird.

Die Reaktion wird in der Regel bei einer Temperatur zwischen 40 °C und 170 °C, bevorzugt zwischen 45 °C und 160 °C, besonders bevorzugt zwischen 50 und 150 °C und ganz besonders bevorzugt zwischen 60 und 140 °C durchgeführt.

Zur Beschleunigung der Reaktion können die üblichen Katalysatoren (C) zugegeben werden, die die Umsetzung von Isocyanatgruppen mit gegenüber Isocyanat reaktiven Gruppen katalysieren. Dafür kommen prinzipiell alle in der Polyurethanchemie üblicherweise verwendeten Katalysatoren in Betracht.

Diese sind beispielsweise organische Amine, insbesondere tertiäre aliphatische, cycloaliphatische oder aromatische Amine, und/oder Lewis-saure organische Metallverbindungen. Als Lewis-saure organische Metallverbindungen kommen z.B. Zinnverbindungen in Frage, wie beispielsweise Zinn-(II)-salze von organischen Carbonsäuren, z.B. Zinn(II)-acetat, Zinn(II)-octoat, Zinn(II)-ethylhexoat und Zinn(II)-laurat und die Dialkylzinn(IV)-salze von organischen Carbonsäuren, z.B.Dimethylzinn-diacetat, Dibutylzinndiacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat. Auch Metallkomplexe wie Acetylacetonate des Eisens, Titans, Aluminiums, Zirkons, Mangans, Nickels und Cobalts sind möglich. Weitere Metallkatalysatoren werden von Blank et al. in Progress in Organic Coatings, 1999, Vol. 35, Seiten 19-29 beschrieben.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Diocytzinndilaurat, Zirkon-Acetylacetonat und Zirkon-2,2,6,6-tetramethyl-3,5-heptandionat.

Auch Wismut-und Cobaltkatalysatoren sowie Cäsiumsalze können als Katalysatoren eingesetzt werden. Als Cäsiumsalze kommen dabei solche Verbindungen in Betracht, in denen folgende Anionen eingesetzt werden: F⁻, Cl⁻, ClO⁻, ClO₃⁻, ClO₄⁻, Br⁻, J⁻, JO₃⁻, CN-, OCN-, NO₂⁻, NO₃⁻, NCO₃⁻, CO₃²⁻, S²⁻, SH-, HSO₃⁻, SO₃²⁻, HSO₄⁻. SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Die so erhaltenen Polyisocyanate (A) enthaltenden Reaktionsgemische werden in der Regel als solche weiterverwendet.

Die Reaktion kann optional in einem inerten Lösungsmittel oder Lösungsmittelgemisch (E) durchgeführt werden. Dieses wird bevorzugt nach der Reaktion nicht entfernt, sondern das Polyisocyanat mit Lösungsmittel direkt verwendet.

Bevorzugt sind polare, nicht protische Lösungsmittel wie Ester, Ether; Glycolether und - ester, bevorzugt von Propylenglykol, besonders bevorzugt von Ethylenglykol, sowie Carbonate.

Ester sind beispielsweise n-Butylacetat, Ethylacetat, 1-Methoxypropylacetat-2 und 2-Methoxyethylacetat, gamma-Butyrolacton, sowie die Mono- und Diacetylester von Ethylenglykol, Diethylenglykol, Triethylenglykol, Propylenglykol, Dipropylenglykol oder Tripropylenglykol, beispielsweise Butylglykolacetat und Butyldiglycolacetat.

Weiterhin denkbar sind Poly-(C₂ bis C₃) alkylenglykol-(C₁ bis C₄)monoalkylether acetate wie beispielsweise Essigsäureester von Mono- oder Dipropylengylkol monomethylether.

Weitere Beispiele sind Carbonate, bevorzugt 1,2-Ethylencarbonat, besonders bevorzugt 1,2-Propylencarbonat oder 1,3-Propylencarbonat.

Ether sind beispielsweise Tetrahydrofuran (THF), Dioxan sowie die Dimethyl-, -ethyl- oder -n-butylether von Ethylenglykol, Diethylenglykol, Triethylenglykol, Propylenglykol, Dipropylenglykol oder Tripropylenglykol, bevorzugt Dipropylenglykol dimethylether, das als Isomerengemisch beispielsweise unter dem Handelsnamen Proglyde® DMM von der Fa. Dow Chemical Company erhaltlich ist.

Besonders bevorzugt sind n-Butylacetat, 1-Methoxypropylacetat-2, 2-Methoxyethylacetat, N-Methyl-pyrrolidon, gamma-Butyrolacton, Propylencarbonat (Solvenon® PC; 4-Methyl-1,3-dioxolan-2-on), Butoxyl (3-Methoxy-n-butylacetat), Butylglycolacetat, Butyldiglycolacetat, Dipropylenglycol-dimethylether, Propylenglycoldiacetat, Ethyl-3-ethoxy-propionat sowie Dicarbonsäureester und deren Mischungen, sowie Gemische der genannten Lösungsmittel.

Ganz besonders bevorzugt sind n-Butylacetat, 1,2-Propylencarbonat, Butylglykolacetat, Butyldiglykolacetat, Dipropylenglykol-dimethylether und 3-Methoxy-n-butylacetat.

Ein Lösungsmittel (E) kann auch nach Abschluß der Reaktion vor Dispergieren in das Bindemittel dem Reaktionsgemisch hinzugegeben werden.

Dem Gemisch kann ferner optional ein weiteres Di- oder bevorzugt Polyisocyanat (F) beigemengt werden, bei dem es sich prinzipiell um die gleichen Di- oder Polyisocyanate handeln kann, wie oben unter (a) aufgeführt, das jedoch von dieser Komponente (a) verschieden sein kann.

Die Komponente (F) kann dabei, bezogen auf Isocyanatgruppen, in der 0 bis zwanzigfachen Menge des Polyisocyanats (A) eingesetzt werden, bevorzugt in der 0 bis zehnfachen Menge.

Ein weiterer Gegenstand der vorliegenden Erfindung ist die Herstellung zweikomponentiger Polyurethanlacke oder wäßriger Dispersionsklebstoffe. Dazu werden die Polyisocyanate (A) mit einer wäßrigen Polyolkomponente (D) vermischt, bevorzugt in diese eingetragen. Dies erfolgt in der Regel unter leichtem bis kräftigem Rühren zu Dispergierung der Polyisocyanate. Es stellt einen Vorteil der erfindungsgemäßen Polyisocyanate dar, daß sie leicht in solchen wäßrigen Lösungen oder Dispersionen von Polyolen als Bindemitteln dispergierbar sind.

Optional können die erfindungsgemäßen dispergierbaren Polyisocyanate (A) noch mit weiteren, nicht dispergierbar-modifizierten Polyisocyanaten, beispielsweise solchen wie unter (a) aufgeführt, abgemischt und mit den Bindemitteln umgesetzt werden. Dabei ist darauf zu achten, daß dann die erfindungsgemäßen Polyisocyanate (A) so mit den dispergieraktiven Komponenten (b) und (c) ausgestattet sein müssen, daß sie ausreichend dispergierbar sind um die gesamten Polyisocyanate (Polyisocyanat (A) und nicht dispergierbar-modifizierte Polyisocyanate) zu dispergieren.

Die Herstellung von Beschichtungsmassen aus den erfindungsgemäß hergestellten wasseremulgierbaren isocyanuratgruppenhaltigen Polyisocyanaten erfolgt durch Umsetzung mit wässrigen Lösungen, Emulsionen oder Dispersionen von Polyolen: Polyacrylatol-, Polyesterol-, Polyurethanol-, Polyetherol-, Polycarbonatol-Dispersionen, sowie deren Hybriden und/oder Mischungen der genannten Polyole. Hybride meint Pfropfcopolymere und andere chemische Reaktionsprodukte, die chemisch gebundene Molekülteile mit unterschiedlichen (oder auch gleichen) der genannten Gruppen beinhalten. Bevorzugt sind Polyacrylat-Polyol-Dispersionen, Polyester-Polyol-Dispersionen, Polyether-Polyol-Dispersionen, Polyurethan-Polyol-Dispersionen, Polycarbonat-Polyol-Dispersionen und deren Hybride.

Polyacrylatole können als primäre oder sekundäre Dispersionen, Emulsionen, Lösungen hergestellt werden. Diese werden hergestellt aus olefinisch ungesättigten Monomeren. Dies sind erstens Säuregruppen aufweisende Comonomere mit z.B. Carboxyl-, Sulfonsäure- und/oder Phosphonsäure-Gruppen oder deren Salze wie z.B. (Meth)acrylsäure, Vinylsulfonsäure oder Vinylphosphonsäure. Dies sind zweitens Hydroxylgruppen aufweisende Comonomere wie Hydroxyalkylester oder -amide der (Meth)acrylsäure wie z.B. 2-Hydroxyethyl- und 2- oder 3-Hydroxypropyl-(meth)acrylat. Dies sind drittens ungesättigte Comonomere, die weder saure noch Hydroxylgruppen aufweisen wie Alkylester der (Meth)acrylsäure, Styrol und Derivate, (Meth)acrylnitril, Vinylester, Vinylhalogenide, Vinylimidazol und andere. Die Eigenschaften können z.B. über die Zusammensetzung des Polymeren, bzw. z.B. über die Glasübergangstemperaturen der Comonomere (mit unterschiedlicher Härte) beeinflusst werden.

Polyacrylatole für wässrige Anwendungen werden beispielsweise beschrieben in EP 358979 (US 5075370), EP 557844 (US 6376602), EP 1141066 (US 6528573) oder 496210 (US 5304400). Ein Beispiel für eine kommerziell erhältliche Polyacrylat-Sekundäremulsion ist Bayhydrol® A 145 (ein Produkt der Fa. Bayer MaterialScience). Beispiele für eine Polyacrylat-Primäremulsion sind Bayhydrol® VP LS 2318 (ein Produkt der Fa. Bayer MateriaiScience) und Luhydran®-Typen der BASF AG.

Andere Beispiele sind Macrynal® VSM 6299w/42WA der Firma Cytec, und Setalux® AQ-Typen der-Firma Nuplex Resins wie Setalux® 6510 AQ-42, Setalux® 6511 AQ-47, Setalux® 6520 AQ-45, Setalux® 6801 AQ-24, Setalux® 6802 AQ-24, und Joncryl® der BASF Resins.

Polyacrylatole können auch eine heterogene Struktur aufweisen, wie dies bei Kern-Schale-Strukturen der Fall ist.

Polyesterole für wässrige Anwendungen werden beispielsweise beschrieben unter EP 537568 (US 5344873), EP 610450 (US 6319981, Polykondensationsharz) und EP 751197 (US 5741849, Polyester-Polyurethan-Gemisch). Polyesterole für wässrige Anwendungen sind beispielsweise WorleePol-Typen der Worlée-Chemie GmbH, Necowel®-Typen der Ashland-Südchemie-Kernfest GmbH, und Setalux® 6306 SS-60 der Fa. Nuplex Resins.

Polyurethanpolyol-Dispersionen für wässrige Anwendungen werden beispielsweise bes-chrieben unter EP 469389 (US 559805). Sie werden z.B. unter dem Markennamen Daotan® der DSM NV vermarktet.

Polyetherole für wässrige Anwendungen werden beispielsweise beschrieben unter EP 758007.

Hybride und Mischungen der verschiedenen Polyole werden beispielsweise beschrieben unter EP 424705 (US 417998), EP 496205 (US 5387642), EP 542085 (5308912, Polyacrylat/Polyether-Gemisch), EP 542105 (US 5331039), EP 543228 (US 5336711, Polyester/Polyacrylat-Hybride), EP 578940 (US 5349041, Polyester/-urethan/- carbonat), EP 758007 (US 5750613, Polyacrylat-Polyether-Gemisch), EP 751197 (US 5741849), EP 1141065 (US 6590028).

Polyester/Polyacrylate werden beispielsweise beschrieben unter EP 678536 (US 5654391). Ein Beispiele für ein Polyester/Polyacrylat-Sekundäremulsion ist Bayhydrol® VP LS 2139/2 (ein Produkt der Fa. Bayer MaterialScience).

Zur Einarbeitung der erfindungsgemäßen wasseremulgierbaren Polyisocyanate reicht in der Regel ein Verteilen des erfindungsgemäß erhaltenen Polyisocyanats in der wäßrigen Dispersion des Polyols. Zur Erzeugung der Emulsion ist in der Regel ein Energieeintrag von 0 bis nicht mehr als 10⁸ W/m³ erforderlich.

Die Dispersionen haben im allgemeinen einen Feststoffgehalt von 10 bis 85, bevorzugt von 20 bis 70 Gew.-% und eine Viskosität von 10 bis 500 mPa*s.

Zur Herstellung einer Beschichtungsmasse werden Polyisocyanat (A) sowie optional (F) und Bindemittel in einem Molverhältnis von Isocyanatgruppen zu gegenüber Isocyanat reaktiven Gruppen von 0,1:1 bis 10:1, bevorzugt 0,2:1 bis 5:1, besonders bevorzugt 0,3:1 bis 3:1 und ganz besonders bevorzugt 0,5:1 bis 2,5:1 miteinander vermischt; wobei gegebenenfalls noch weitere lacktypische Bestandteile eingemischt werden können, und auf das Substrat aufgetragen.

In einer Ausführungsform der Erfindung liegt beim Einsatz einer (Polyacrylat)-Primärdispersion ein Verhältnis von NCO zu gegenüber NCO-reaktiven Gruppen von 1:8 bis 2:1, bevorzugt von 1:2 bis 1:3 und besonders bevorzugt von etwa 1:2,5 vor.

In einer anderen Ausführungsform der Erfindung liegt beim Einsatz einer (Polyacrylat)-Sekundärdispersion ein Verhältnis von NCO zu gegenüber NCO-reaktiven Gruppen von 1,3:1 bis 2:1, insbesondere von 1,4:1 bis 1,8 zu 1 vor.

Die Härtung erfolgt üblicherweise solange bis die gehärteten Materialien weiter gehandhabt werden können. Die damit verbundenen Eigenschaften sind z.B. Staubtrocknung, Durchtrocknung, Blockfestigkeit oder Verpackungsfähigkeit.

In einer bevorzugten Ausführungsform erfolgt die Härtung bei Raumtemperatur erfordert innerhalb von nicht mehr 12 Stunden, bevorzugt bis zu 8 Stunden, besonders bevorzugt bis zu 6, ganz besonders bevorzugt bis zu 4 und insbesondere bis zu 3 Stunden.

In einer andere bevorzugten Variante erfolgt die Härtung z.B. eine halbe Stunde bei Temperaturen bis 80 °C. Nach Abkühlen ist gegebenenfalls noch eine Nachhärtung bei Raumtemperatur nötig.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die gegebenenfalls enthaltenen flüchtigen Bestandteile der Beschichtungsmasse, gegebenenfalls unter Erhitzen, entfernt. Dieser Vorgang kann gewünschten falls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen.

Die Dicke einer solchen zu härtenden Schicht kann von 0,1 µm bis mehrere mm betragen, bevorzugt von 1 bis 2.000 µm, besonders bevorzugt 5 bis 200 µm, ganz besonders bevorzugt von 10 bis 60 µm (bezogen auf den Lack im Zustand in dem das Lösungsmittel aus dem Lack entfernt ist).

Weiterhin sind auch Substrate, beschichtet mit einer erfindungsgemäßen Mehrschichtlackierung Gegenstand der vorliegenden Erfindung.

Besonders geeignet sind solche Polyurethanlacke für Anwendungen, in denen eine besonders hohe Applikationssicherheit, Außenwitterungsbeständigkeit, Optik, Lösemittel-, Chemikalien- und Wasserfestigkeit gefordert werden.

Die erhaltenen Beschichtungsmassen und Lackformulierungen eignen sich zum Beschichten von Substraten wie Holz, Holzfurnier, Papier, Pappe, Karton, Textil, Folie, Leder, Vlies, Kunststoffoberflächen, Glas, Keramik, mineralischen Baustoffen, wie Zement-Formsteine und Faserzementplatten oder Metallen, die jeweils optional vorbeschichtet bzw. vorbehandelt sein können, insbesondere für Kunststoffoberflächen.

Derartige Beschichtungsmassen eignen sich als oder in Innen- oder Außenbeschichtungen, also solche Anwendungen, die dem Tageslicht ausgesetzt sind, bevorzugt von Gebäudeteilen, Beschichtungen auf (Groß-)Fahrzeugen und Flugzeugen und industriellen Anwendungen, Dekolackierungen, Brücken, Gebäuden, Strommasten, Tanks, Containern, Pipelines, Kraftwerken, chemischen Anlagen, Schiffen, Kränen, Pfählen, Spundwänden, Armaturen, Rohren, Fittings, Flanschen, Kupplungen, Hallen, Dächern und Baustahl, Möbeln, Fenstern, Türen, Parkett, Can-Coating und Coil-Coating, für Bodenbeläge, wie bei Parkdecks oder in Krankenhäusern in Automobillacken als OEM und refinish-Anwendung.

Bevorzugt werden derartige Beschichtungsmassen bei Temperaturen zwischen Umgebungstemperatur bis 80 °C, bevorzugt bis 60 °C, besonders bevorzugt bis 40 °C eingesetzt. Bevorzugt handelt es sich dabei um solche Gegenstände, die nicht bei hohen Temperaturen gehärtet werden können, wie große Maschinen, Flugzeuge, Großraumfahrzeuge und refinish-Anwendungen.

Insbesondere werden die erfindungsgemäßen Beschichtungsmassen als Klar-, Basis- und Decklacke(n), Primern und Füllern eingesetzt.

Derartige Polyisocyanatzusammensetzungen können als Härter für die Herstellung von Lacken, Klebstoffen und Dichtungsmassen eingesetzt werden.

Somit sind Lacke, Klebstoffe und Dichtungsmassen, enthaltend mindestens eine erfindungsgemäße Polyisocyanatzusammensetzung ebenfalls Gegenstand der vorliegenden Erfindung, sowie Substrate, die mit diesen beschichtet, verklebt bzw. abgedichtet sind.

In dieser Schrift verwendete ppm- und Prozentangaben beziehen sich, falls nicht anders angegeben, auf Gewichtsprozente und -ppm.

Die folgenden Beispiele sollen die Erfindung erläutern, aber nicht auf diese Beispiele einschränken.

### Beispiele

### Polyisocyanat PI 1

Durch Trimerisierung eines Teiles der Isocyanatgruppen von 1,6-Diisocyanatohexan (HDI) hergestelltes, Isocyanuratgruppen aufweisendes Polyisocyanat, welches im wesentlichen aus Tris-(6-isocyanatohexyl)-isocyanurat und dessen höheren Homologen besteht, mit einem NCO-Gehalt von 22,2%, einem Gehalt an monomerem Diisocyanat von weniger als 0,3%, einer Viskosität bei 23°C von 1900 mPa*s und einer mittleren NCO-Funktionalität von ca. 3,3.

### Polyisocyanat PI 2

Durch Trimerisierung eines Teiles der Isocyanatgruppen von 1,6-Diisocyanatohexan (HDI) hergestelltes Isocyanuratgruppen aufweisendes niedervoskoses Polyisocyanat, welches im wesentlichen aus Tris-(6-isocyanatohexyl)-isocyanurat und dessen höheren Homologen besteht, mit einem NCO-Gehalt von 23,5%, einem Gehalt an monomerem Diisocyanat von weniger als 0,3%, einer Viskosität bei 23°C von 1330 mPa*s und einer mittleren NCO-Funktionalität von ca. 3,45. Dieses Produkt ist unter dem Handelsnamen Basonat® LR 9046 erhältlich von der BASF Aktiengesellschaft, Ludwigshafen, Deutschland.

### Polyisocyanat PI 3

Durch Trimerisierung eines Teiles der Isocyanatgruppen von 1-Isocyanato-3,3,5-trimethyl-5-(isocyanatomethyl)cyclohexan (Isophorondiisocyanat; IPDI) hergestelltes Isocyanuratgruppen aufweisendes Polyisocyanat, welches im wesentlichen aus Tris-(6-isocyanatohexyl)-isocyanurat und dessen höheren Homologen besteht, mit einem NCO-Gehalt von 12,0 Gew%, einem Gehalt an monomerem Diisocyanat von weniger als 0,5 Gew%, einer Viskosität bei 23°C von 600 mPa*s und einer mittleren NCO-Funktionalität von ca. 3,0. Dieses Produkt ist unter dem Handelsnamen Basonat IT 170 B erhältlich von der BASF Aktiengesellschaft, Ludwigshafen, Deutschland.

### Polyisocyanat PI 4

Durch Allophanatisierung eines Teiles der Isocyanatgruppen von 1,6-Diisocyanatohexan (HDI) hergestelltes Allophanatgruppen aufweisendes Polyisocyanat, mit einem NCO-Gehalt von 22,0 Gew%, einem Gehalt an monomerem Diisocyanat von weniger als 0,3%, einer Viskosität bei 23°C von 1100 mPa*s und einer mittleren NCO-Funktionalität von ca. 4,9. Dieses Produkt ist unter dem Handelsnamen Basonat HA 100 erhältlich von der BASF Aktiengesellschaft, Ludwigshafen, Deutschland.

### Polyisocyanat PI 5

Durch Allophanatisierung eines Teiles der Isocyanatgruppen von 1,6-Diisocyanatohexan (HDI) hergestelltes Allophanatgruppen aufweisendes Polyisocyanat, mit einem NCO-Gehalt von 19,5%, einem Gehalt an monomerem Diisocyanat von weniger als 0,3%, einer Viskosität bei 23°C von 350 mPa*s und einer mittleren NCO-Funktionalität von ca. 2,8. Dieses Produkt ist unter dem Handelsnamen Basonat HA300 erhältlich von der BASF Aktiengesellschaft, Ludwigshafen, Deutschland.

### Polyetherole

### Polyetherol PEO 1

Auf Methanol gestartetes, unter Kaliumhydroxidkatalyse hergestelltes, monofunktionelles Polyethylenoxid mit einer mittleren OH-Zahl von 112 mg KOH/g, gemessen nach DIN 53 240, entsprechend einem Molekulargewicht von 500 g/mol. Die noch anwesenden Katalysatorreste wurden anschließend mit Essigsäure neutralisiert. Die Basizität wurde durch Titration mit HCl zu 10,6 mmol/kg bestimmt.

### Polyetherol PEO 2

Auf Methanol gestartetes, unter Kaliumhydroxidkatalyse hergestelltes, monofunktionelles Polyethylenoxid mit einer mittleren OH-Zahl von 112 mg KOH/g, gemessen nach DIN 53 240, entsprechend einem Molekulargewicht von 500 g/mol. Die noch anwesenden Katalysatorreste wurden anschließend mit Essigsäure neutralisiert und das Produkt entsalzt. Hierbei wurde auch gebildetes Kaliumacetat entfernt.

### Beispiel 1

250 g Polyisocyanat PI 1 wurden mit 6,25 g (33,4 mmol) 4-Aminotoluol-2-sulfonsäure und 4,25 g (33,4 mmol) Dimethylcyclohexylamin, sowie 20 g Polyetherol PEO 1 versetzt und 30 min bei 100°C gerührt. Die Reaktion wurde durch Zugabe von 0,15 g para-Toluolsulfonsäure gestoppt. Das sehr gut wasserdispergierbare Produkt hatte einen NCO-Gehalt von 18,1 %, eine Viskosität von 5370 mPa*s bei 23°C und einen Gehalt an Sulfonatgruppen von 122 mmol Sulfonatlkg.

| | |
|---|---|
| Festgehalt | 100 % |
| NCO-Gehalt | 18,1 % |
| NCO-Funktionalität | 3,0 |
| Viskosität (23°C) | 5370 mPa*s |
| Sulfonatgruppengehalt | 122 mmol/kg (entspricht 1,0 Gew%) |
| Gehalt an eingebaut vorliegenden Alyklenoxidgruppen | 6,7 % |

### Beispiel 2

250 g Polyisocyanat PI 1 wurden mit 3,13 g (16,7 mmol) 4-Aminotoluol-2-sulfonsäure und 2,13 g (16,7 mmol) Dimethylcyclohexylamin, sowie 10 g Polyetherol PEO 1 versetzt und 1 h bei 100°C gerührt. Die Reaktion wurde durch Zugabe von 0,15 g para-Toluolsulfonsäure gestoppt. Das sehr gut wasserdispergierbare Produkt hatte einen NCO-Gehalt von 19,95 %, eine Viskosität von 4250 mPa*s bei 23°C und einen Gehalt an Sulfonatgruppen von 66 mmol/kg.

| | |
|---|---|
| Festgehalt | 100 % |
| NCO-Gehalt | 19,95 % |
| NCO-Funktiona lität | 2,9 |
| Viskosität (23°C) | 4250 mPa*s |
| Sulfonatgruppengehalt | 66 mmol/kg (entspricht 0,53 Gew%) |
| Gehalt an eingebaut vorliegenden Alyklenoxidgruppen | 3,5 % |

### Beispiel 3

250 g Polyisocyanat PI 1 wurden mit 4,7 g (25,1 mmol) 4-Aminotoluol-2-sulfonsäure und 3,19 g (25,1 mmol) Dimethylcyclohexylamin, sowie 5 g Polyetherol PEO 1 versetzt und 1 h bei 100°C gerührt. Die Reaktion wurde durch Zugabe von 0,05 g para-Toluolsulfonsäure gestoppt. Das gut wasserdispergierbare Produkt hatte einen NCO-Gehalt von 20,2 %, eine Viskosität von 6630 mPa*s bei 23°C und einen Gehalt an Sulfonatgruppen von 96 mmol/kg.

| | |
|---|---|
| Festgehalt | 100 % |
| NCO-Gehalt | 20,2 % |
| NCO-Funktionalität | 3,1 |
| Viskosität (23°C) | 6630 mPa*s |
| Sulfonatgruppengehalt | 96 mmol/kg (entspricht 0,78 Gew%) |
| Gehalt an eingebaut vorliegenden Alyklenoxidgruppen | 1,8 % |

### Beispiel 4

250 g Polyisocyanat PI 2 wurden mit 3,13 g (16,7 mmol) 4-Aminotoluol-2-sulfonsäure und 2,13 g (16,7 mmol) Dimethylcyclohexylamin, sowie 10 g Polyetherol PEO 1 versetzt und 30 min bei 100°C gerührt. Die Reaktion wurde durch Zugabe von 0,15 g para-Toluolsulfonsäure gestoppt. Das sehr gut wasserdispergierbare Produkt hatte einen NCO-Gehalt von 20,3%, eine Viskosität von 3962 mPa*s bei 23°C und einen Gehalt an Sulfonatgruppen von 66 mmol/kg.

| | |
|---|---|
| Festgehalt | 100 % |
| NCO-Gehalt | 20,3 % |
| NCO-Funktionalität | 3,0 |
| Viskosität (23°C) | 3962 mPa*s |
| Sulfonatgruppengehalt | 66 mmol/kg (entspricht 0,53 Gew%) |
| Gehalt an eingebaut vorliegenden Alyklenoxidgruppen | 3,5 % |

### Beispiel 5

250 g Polyisocyanat PI 4 wurden mit 3,13 g (16,7 mmol) 4-Aminotoluol-2-sulfonsäure und 2,13 g (16,7 mmol) Dimethylcyclohexylamin, sowie 10 g Polyetherol PEO 1 versetzt und 30 min bei 100°C gerührt. Die Reaktion wurde durch Zugabe von 0,15 g para-Toluolsulfonsäure gestoppt. Das sehr gut wasserdispergierbare Produkt hatte einen NCO-Gehalt von 20,3%, eine Viskosität von 1977 mPa*s bei 23°C und einen Gehalt an Sulfonatgruppen von 66 mmol/kg.

| | |
|---|---|
| Festgehalt | 100 % |
| NCO-Gehalt | 20,3 % |
| NCO-Funktionalität | 2,9 |
| Viskosität (23°C) | 1977 mPa*s |
| Sulfonatgruppengehalt | 66 mmol/kg (entspricht 0,53 Gew%) |
| Gehalt an eingebaut vorliegenden Alyklenoxidgruppen | 3,5 % |

### Beispiel 6

250 g Polyisocyanat PI 5 wurden mit 3,13 g (16,7 mmol) 4-Aminotoluol-2-sulfonsäure und 2,13 g (16,7 mmol) Dimethylcyclohexylamin, sowie 10 g Polyetherol PEO 1 versetzt und 30 min bei 100°C gerührt. Die Reaktion wurde durch Zugabe von 0,15 g para-Toluolsulfonsäure gestoppt. Das sehr gut wasserdispergierbare Produkt hatte einen NCO-Gehalt von 16,7%, eine Viskosität von 933 mPa*s bei 23°C und einen Gehalt an Sulfonatgruppen von 66 mmol/kg.

| | |
|---|---|
| Festgehalt | 100 % |
| NCO-Gehalt | 16,7 % |
| NCO-Funktionalität | 2,3 |
| Viskosität (23°C) | 933 mPa*s |
| Sulfonatgruppengehalt | 66 mmol/kg (entspricht 0,53 Gew%) |
| Gehalt an eingebaut vorliegenden Alyklenoxidgruppen | 3,5 % |

### Beispiel 7

250 g Polyisocyanat PI 1 wurden mit 10 g Polyetherol PEO 2 versetzt und 30 min bei 100°C gerührt, dann wurden 3,13 g (16,7 mmol) 4-Aminotoluol-2-sulfonsäure und 2,13 g (16,7 mmol) Dimethylcyclohexylaminzugegeben und weitere 30 min bei 80°C reagiert.. Das sehr gut wasserdispergierbare Produkt hat einen NCO-Gehalt von 20,15 %, eine Viskosität von 3450 mPa*s bei 23°C und einen Gehalt an Sulfonatgruppen von 63 mmol/kg.

| | |
|---|---|
| Festgehalt | 100 % |
| NCO-Gehalt | 20,15 |
| NCO-Funktionalität | 3,0 |
| Viskosität (23°C) | 3450 mPa*s |
| Sulfonatgruppengehalt | 63 mmol/kg (entspricht 0,47 Gew%) |
| Gehalt an eingebaut vorliegenden Alyklenoxidgruppen | 3,5 % |

### Beispiel 8

142,9 g Polyisocyanat PI 1 und 153 g Polyisocyanat PI 3 wurden mit 10 g Polyetherol PEO 2 versetzt und 1 h bei 100°C reagiert. Dann wurden 3,13 g (16,7 mmol) 4-Aminotoluol-2-sulfonsäure und 2,13 g (16,7 mmol) Dimethylcyclohexylaminzugegeben und eine weitere Stunde bei bei 80°C gerührt. Das sehr gut wasserdispergierbare Produkt hat einen NCO-Gehalt von 16,5 %, eine Viskosität von 8707 mPa*s bei 23°C und einen Gehalt an Sulfonatgruppen von 91 mmol/kg.

| | |
|---|---|
| Festgehalt | 85 % |
| NCO-Gehalt | 16,5 % |
| NCO-Funktionalität | 3,0 |
| Viskosität (23°C) | 8707 mPa*s |
| Sulfonatgruppengehalt | 91 mmol/kg (entspricht 0,43 Gew%) |
| Gehalt an eingebaut vorliegenden Alyklenoxidgruppen | 3,0 % |

### Beispiel 9 (Vergleich)

250 g Polyisocyanat PI 1 wurden mit 12,5 g (72,2 mmol) 4-Aminobenzolsulfonsäure (Sulfanilsäure) und 9,17 g (72,2 mmol) Dimethylcyclohexylamin versetzt und zunächst 5 h bei 80°C, dann 1 h bei 100°C gerührt. Die Sulfanilsäure löste sich nicht.

### Beispiel 10 (Vergleich)

250 g Polyisocyanat PI 1 wurden mit 12,5 g (72,6 mmol) 3-Aminobenzolsulfonsäure (Metanilsäure) und 9,17 g (72,2 mmol) Dimethylcyclohexylamin versetzt und zunächst 5 h bei 80°C, dann 1 h bei 100°C gerührt. Die Metanilsäure löste sich nicht.

### Beispiel 11 (Vergleich)

250 g Polyisocyanat PI 1 wurden mit 12,5 g (66,8 mmol) 2-Aminotoluol-5-sulfonsäure und 8,5 g (66,8 mmol) Dimethylcyclohexylamin versetzt und zunächst 3 h bei 100°C gerührt. Die 2-Aminotoluol-5-sulfonsäure löste sich nicht.

### Beispiel 12 (Vergleich)

250 g Polyisocyanat PI 1 wurden mit 12,5 g (66,8 mmol) 5-Aminotoluol-2-sulfonsäure und 8,5 g (66,8 mmol) Dimethylcyclohexylamin versetzt und zunächst 3 h bei 100°C gerührt. Die 5-Aminotoluol-2-sulfonsäure löste sich, das Produkt war allerdings nicht gut wasserdispergierbar.

### Beispiel 13 (Vergleich)

250 g Polyisocyanat PI 1 wurden mit 12,5 g (49,5 mmol) 3-(4-(2-Hydroxyethyl)-1-piperazinyl)propansulfonsäure (HEPPS) und 6,3 g (49,5 mmol) Dimethylcyclohexylamin versetzt und zunächst 4 h bei 100°C gerührt. HEPPS löste sich nicht.

### Beispiel 14 (Vergleich, analog Beispiel 1, DE 199 58 170)

500 g von Polyisocyanat PI 1 wurden bei 100°C innerhalb von 30 Minuten mit 88g des Polyetherols PEO 2 versetzt und ca. 2h bei dieser Temperatur gerührt bis der theoretische NCO-Wert von 17,6% erreicht hat. Dann wurde durch Zugabe von 0,01g Zink (II)-ethylhexanoat allophanatisiert und nach Erreichen eines NCO-Wertes von 16,2% die Reaktion durch Zugabe von 0,01 g Benzoylchlorid gestoppt. Das erhaltene Isocyanat hatte eine Viskosität von 6800 mPa*s.

### Beispiel 15 (Vergleich, analog Beispiel 3, EP 1 287 052)

Zu 500 g Polyisocyanat PI 1 gab man 15,4 g (0,07 mol) 3-(Cyclohexylamino) propansulfonsäure und 9,0 g (0,07 mol) Dimethylcylclohexylamin. Man setzte 2h bei 80°C um und erhielt ein wasserdispergierbares Polyisocyanat mit NCO-Gehalt 20,5 % und einer Viskosität von 6000 mPa*s.

### Beispiel 16 (Vergleich)

Basonat® HW 100 der BASF AG Ludwigshafen mit einem NCO-Gehalt von 17 % und einer Viskosität (23 °C) von 4000 mPa*s.

### Beispiel 17 (Vergleich)

Rhodocoat® WT 2102 der Fa. Rhodia, mit einem NCO-Gehalt von 18,76 %.

### Anwendungsbeispiel A

Verwendung als Vernetzer in wäßrigen 2K Polyurethansystemen (Einarbeitung von Hand)

### Hydroxyfunktionelle Kompontente A (Polyol A):

100 Teile einer wäßrigen ca. 45%igen Dispersion des hydroxyfunktionellen Polyacrylatharzes Luhydran® S 937 T der BASF AG Ludwigshafen mit einer mittleren OH-Zahl von 100 mg KOH/g (auf Feststoff) wurden versetzt mit 2,4 Teilen Butyldiglycolacetat, 6,5 Teilen Butylglycolacetat, 6,4 Teilen vollensalztem Wasser, 1,46 Teilen Dimethylethylamin (1:1 in Wasser), 3,75 Teilen vollensalztem Wasser, 0,38 Teilen des Entschäumers Agitan® 299 der Fa. Münzing Chemie GmbH Heilbronn und 0,63 Teilen des Netz- und Fließmittels Fluorad® FC 4430, 10%ig in Wasser, der Fa. 3M. Die hydroxyfunktionelle Komponente wird unter Rühren mit einem Dispermaten homogenisiert. Der pH-Wert der Lösung soll vor Einsatz in dem empfohlenen pH-Bereich von 8,0 - 8,5 liegen.

### Isocyanatfunktionelle Komponenten:

Die Isocyanate aus den obigen Beispielen wurden soweit in Tabelle 1 nicht anders beschrieben mit Dipropylenglykoldimethylether (Proglyde® DMM der Fa. DOW) auf einen Feststoffgehalt von 80 % verdünnt.

Die Emulgierung des Polyols A, des Polyisocyanats und einer weiteren Menge Wasser (s. Tabelle 1) wurde wie folgt per Hand durchgeführt: Die hydroxyfunktionelle Komponente wurde in einem 100 ml Glas vorgelegt und die Polyisocyanat-Komponente zugegeben. Nach 30 Sekunden wurde mit einem Holzspatel von Hand ca. 30 Sekunden gerührt. Die fehlende Wassermenge, um den Gesamtlack auf einen Festkörpergehalt von 37 % einzustellen, wurde zugegeben und nochmals 20 Sekunden gerührt. Danach ließ man die Mischung 10 Minuten zum Entgasen stehen. Die Mischungsverhältnisse der Komponenten sind in der Tabelle 1 angegeben.

**Tabelle 1: Verwendung der Polyisocyanate in wässrigen 2K PUR-Lacken. Mischungsverhältnisse der Komponenten**

| Beispiel mit Polyisocyanat aus Beispiel | 2 | 4 | 5 | 14 (Vergleich) | 16 (Vergleich) |
|---|---|---|---|---|---|
| Polyol A [g] | 70 | 70 | 70 | 70 | 70 |
| Polyisocyanat [g] | 4,8 | 4,6 | 4,4 | 6,0 | 5,7 |
| Wasser [g] | 2,4 | 12,0 | 13 | 3,7 | 3,4 |
| Nicht flüchtiger Anteil | 38,5 | 34,3 | 34,0 | 38,5 | 38,5 |

Danach wurden die Filme mit einem Filmziehrahmen (Kastenrakel) in einer Schichtdicke von 150 µm nass appliziert.

Die Untersuchungen erfolgen in einem Klimaraum bei 50 ± 10 % Luftfeuchtigkeit und 23 ± 2 °C. Folgende Tests wurden durchgeführt:
Filmeindruck auf einer Glasplatte.
Pendelhärte nach König nach DIN 53157 in Anzahl der Schwingungen (Glasplatte).
Glanz (Bonderblech).
Besandungstest: Beim Besandungstest (Glasplatte; Doppelbestimmung) wird die Durchtrocknung.

Für die Messung der Durchtrocknung laufen zwei Rädchen über den Lack. Diese haben einen Durchmesser von 19-29 mm und eine Breite von 3 mm. Durch die Auflage eines Trichters (107-117 g Eigengewicht mit 60-80 g Sand) auf den Rädchen und damit den nassen Lackfilm, entsteht eine breite Vertiefung im Lackfilm. Die Messung beginnt in der Mitte dieser Vertiefung. Der Lack wird direkt nach Aufziehen mit einer Geschwindigkeit von 1 cm/h unter den Rädchen entlang gezogen. Der Lackfilm hat die Durchtrocknung erreicht, sobald keine deutliche Spur mehr zu erkennen ist bzw. die Spur für mehrere Zentimeter unterbrochen ist.

Es wurden Filme mit den folgenden Eigenschaften erhalten:

| Polyisocyanat aus Beispiel | 2 | 4 | 5 | 14 (Vergleich) | 16 (Vergleich) |
|---|---|---|---|---|---|
| Bodensatz im Becher | Spur | Spur | Spur | Sehr viel | Viel |
| Filmoptik Nassfilm | Homogener Film, guter Verlauf | Homogener Film, guter Verlauf | Homogener Film, guter Verlauf | Viel Koagulat, Fischaugen | Etwas Koagulat, einzelne Schlieren |
| Glanz (30 min, 60°C, 24h RT), 60° [%] | 96 | 90 | 95 | Nicht meßbar | 93 |
| Glanz (30 min, 60°C, 24h RT), 20° [%] | 53 | 56 | 66 | Nicht meßbar | 52 |
| Pendelhärte (Schläge) | | | | | |
| 1d, RT | 80 | 85 | 97 | 67 | 80 |
| 7d, RT | 119 | | | 110 | 119 |
| 30 min 110°C, , 24h RT | 153 | | | 147 | 147 |
| Durchtrocknung | 3,5 h | 3 h | 2,75 h | 4,5 h | 5,0 h |

Der Glanz wird nach Trocknung bei der angegeben Temperatur für die angegebene Zeit in den angegebenen Winkel gemessen.

Die Pendelhärte wird nach Trocknung bei der angegeben Temperatur (RT=Raumtemperatur) für die angegebene Zeit (d=Tag) gemessen.

Die Vergleiche zeigen, dass die erfindungsgemäßen Polyisocyanate leicht von Hand in die hydroxyfunktionelle Komponente einarbeitbar sind, gleichzeitig aber gut trocknende Lacke liefern.

### Anwendungsbeispiel B

Verwendung als Vernetzer in wäßrigen 2K Polyurethan-Lacken (bei Einrühren mit hoher Scherenergie)

### Hydroxyfunktionelle Kompontente B (Polyol B):

100 Teile einer wäßrigen, ca. 42%igen Dispersion des hydroxyfunktionellen Polyacrylatharzes Macrynal® VSM 6299w /42 WA der Fa. Cytec mit einer mittleren OH-Zahl von 135 mg KOH/g (auf Feststoff) wurden mit 2,09 Teilen Surfynol® 104 (ca. 50 % in Butylglykol, Fa. Biesterfeld) versetzt und 15 min bei 1800 U/min gerührt. Dazu wurden 0,38 Teile Additol® XW 390 der Fa. Vianova Resins gegeben und weitere 5 min bei 1800 U/min gerührt. Dazu wurden 14,48 Teile vollensalztes Wasser gegeben und gerührt

### Isocyanatfunktionelle Komponenten:

Die Isocyanate aus den obigen Beispielen wurden mit Butoxyl® (3-Methoxy-n-butylacetat der Firma Biesterfeld), auf einen Feststoffgehalt von 80 % verdünnt.

Die Emulgierung erfolgte mit einem Dispermat über 5 min bei 2000 U/min. Dazu wurde die hydroxyfunktionelle Komponente vorgelegt und die Polyisocyanat-Komponente zugegeben. Nach 30 Sekunden wurde mit einem Holzspatel von Hand ca. 30 Sekunden gerührt. Die fehlende Wassermenge, um den Gesamtlack auf einen Festkörpergehalt von 37 % einzustellen, wurde zugegeben und nochmals 20 Sekunden gerührt. Danach ließ man die Mischung 10 Minuten stehen zum Entgasen. Die Mischungsverhältnisse der Komponenten sind in der Tabelle 2 angegeben.

**Tabelle 2: Verwendung der Polyisocyanate in wässrigen 2K PUR-Lacken (ca. 34 %-ig). Mischungsverhältnisse der Komponenten**

| | | | |
|---|---|---|---|
| Polyisocyanat aus Beispiel | 2 | 16 | 17 |
| Polyol B [g] | 70 | 70 | 70 |
| Polyisocyanat [g] | 32,4 | 27,8 | 29,5 |
| Wasser [g] | 25,3 | 20,7 | 22,6 |

Danach wurden die Filme mit einem Filmziehrahmen (Kastenrakel) in einer Schichtdicke von 150 µm nass appliziert.

Es wurden Filme mit den folgenden Eigenschaften erhalten:

| Polyisocyanat aus | Beispiel 2 | Vergleichsbeispiel 16 | Vergleichsbeispiel 17 |
|---|---|---|---|
| Aussehen | Klar, farblos | Klar, farblos | Klar, farblos |
| Glanz | 95 | 95 | 95 |
| (30 min, 60°C, 24h RT), 60° [%] | | | |
| Glanz | 80 | 85 | 83 |
| (30min, 60°C, 24h RT), 20° [%] | | | |
| Pendelhärte (Schläge) | | | |
| 6h, RT | 12 | 6 | 6 |
| 1d, RT | 85 | 52 | 75 |
| 7d, RT | 93 | 67 | 83 |
| 30 min 60°C, 24h RT | 123 | 79 | 111 |
| 30 min 110°C, 24h RT | 137 | 124 | 137 |
| Durchtrocknung | 6,5 h | 8 h | 4,5 h |

Der Vergleich zeigt, dass die erfindungsgemäßen Polyisocyanate auch bei höheren Scherenergien einen gut trocknenden Lack liefern.

### Anwendungsbeispiel C

### Verwendung als Vernetzer in wäßrigen 2K Polyurethansystemen (Einarbeitung mit Dispermat)

Die Versuche erfolgten analog Anwendungsbeispielen A mit der hydroxyfunktionellen Kompontente A (Polyol A). Die 100%igen Polyisocyanat-Komponenten wurden mit Proglyde® DMM auf 80 % verdünnt. Polyisocyanat und Wasser wurden jeweils mit einem Dispermaten eingerührt, so dass sich die Komponenten homogen lösten und die Bildung von Mikroschaum gering gehalten wurde.

Verwendung der Polyisocyanate in wässrigen 2K PUR-Lacken. Mischungsverhältnisse der Komponenten

| Beispiel mit Polyisocyanat aus Beispiel | 2 | 15 (Vergleich) |
|---|---|---|
| Polyol A [g] | 70 | 70 |
| Polyisocyanat [g] | 4,8 | 4,7 |
| Wasser [g] | 2,4 | 2,4 |
| Nicht flüchtiger Anteil | 38,5 | 38,5 |

Die Untersuchungen erfolgten entsprechend der Anwendungsbeispiele A. Es wurden Filme mit den folgenden Eigenschaften erhalten:

| Polyisocyanat aus Beispiel | 2 | 15 (Vergleich) |
|---|---|---|
| Glanz (30 min, 60°C, 24h RT), 60° [%] | 85 | 60 |
| Glanz (30 min, 60°C, 24h RT), 20° [%] | 42 | 21 |
| 30 min 60°C, 24h RT | 128 | 114 |
| 30 min 110°C, 24h RT | 150 | 147 |
| Durchtrocknung | 3,5 h | 5,0 h |

Die Vergleiche zeigen, dass das erfindungsgemäße Polyisocyanat bei Einrührung mit dem Dispermaten in der Durchtrocknung bei Raumtemperatur, sowie nach 30 Minuten Härtung bei 60 °C und nachfolgender Nachhärtung von 24 h bei Raumtemperatur in der Pendelhärte und im Glanz, sowie durch eine verkürzte Durchtrocknung Vorteile gegenüber dem Vergleichsbeispiel 15 aufweisen.

## Patentansprüche

1. Wasserdispergierbare Polyisocyanate (A), enthaltend als Aufbaukomponenten
(a) mindestens ein Di- oder Polyisocyanat,
(b) mindestens eine substituierte aromatische Sulfonsäure, die genau eine primäre oder sekundäre, bevorzugt primäre Aminogruppe trägt, wobei die Positionen am aromatischen Ring in ortho-Stellung zur Aminogruppe unsubstituiert sind,
(c) mindestens ein monofunktionelles Polyalkylenglykol,
(d) optional mindestens ein höhermolekulares Di- oder Polyol und
(e) optional mindestens ein niedermolekulares Di- oder Polyol.

2. Wasserdispergierbare Polyisocyanate (A) gemäß Anspruch 1, **dadurch gekennzeichnet, daß** es sich bei der Komponente (a) um ein aus (cyclo)aliphatischen Isocyanaten aufgebautes Polyisocyanat handelt.

3. Wasserdispergierbare Polyisocyanate (A) gemäß einem der vorstehenden Ansprüche, **dadurch gekennzeichnet, daß** es sich bei der Komponente (a) um ein allophanat- und/oder isocyanuratgruppenhaltiges Polyisocyanat auf Basis Isophorondiisocyanat und/oder 1,6-Hexamethylendiisocyanat handelt.

4. Wasserdispergierbare Polyisocyanate (A) gemäß einem der vorstehenden Ansprüche, **dadurch gekennzeichnet, daß** es sich bei der Komponente (b) um eine substituierte aromatische Sulfonsäure der Formel (I) handelt, 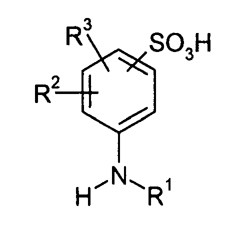 worin
R¹, R² und R³ unabhängig voneinander Wasserstoff, Alkyl, Cycloalkyl oder Aryl, wobei die genannten Reste jeweils durch Aryl, Alkyl, Aryloxy, Alkyloxy, Heteroatome und/oder Heterocyclen substituiert sein können, bedeuten,
wobei R² und R³ auch zusammen einen Ring, bevorzugt einen annellierten aromatischen Ring ausbilden können,
mit der Maßgabe, daß mindestens einer der Reste R² und R³ ungleich Wasserstoff ist.

5. Wasserdispergierbare Polyisocyanate (A) gemäß Anspruch 4, **dadurch gekennzeichnet, daß** in Formel (I) einer der Reste R² und R³ Wasserstoff und der andere ungleich Wasserstoff ist.

6. Wasserdispergierbare Polyisocyanate (A) gemäß Anspruch 4 oder 5, **dadurch gekennzeichnet, daß** sich in Formel (I) die Sulfonsäuregruppe in meta-Stellung relativ zur primären oder sekundären Aminogruppe am aromatischen Ring befindet.

7. Wasserdispergierbare Polyisocyanate (A) gemäß Anspruch 5, **dadurch gekennzeichnet, daß** in Formel (I) von den Substituenten R² und R³ sich derjenige der Reste, der ungleich Wasserstoff ist, in para-Position am aromatischen Ring relativ zur primären oder sekundären Aminogruppe befindet.

8. Wasserdispergierbare Polyisocyanate (A) gemäß einem der vorstehenden Ansprüche, **dadurch gekennzeichnet, daß** die Verbindung (b) ausgewählt ist aus der Gruppe bestehend aus 4-Aminotoluol-2-sulfonsäure, 5-Aminotoluol-2-sulfonsäure und 2-Aminonaphthalin-4-sulfonsäure.

9. Wasserdispergierbare Polyisocyanate (A) gemäß einem der vorstehenden Ansprüche, **dadurch gekennzeichnet, daß** die Verbindung (c) die Formel erfüllt,
R⁴-O-[-Xᵢ-]ₖ-H
worin
R⁴ C₁ - C₂₀-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₂₀-Alkyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus bedeutet, wobei die genannten Reste jeweils durch funktionelle Gruppen, Aryl, Alkyl, Aryloxy, Alkyloxy, Halogen, Heteroatome und/oder Heterocyclen substituiert sein können,
k für eine ganze Zahl von 5 bis 40 steht und
jedes Xᵢ für i = 1 bis k unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-,
worin Ph für Phenyl und Vin für Vinyl steht.

10. Wasserdispergierbare Polyisocyanate (A) gemäß einem der vorstehenden Ansprüche, **dadurch gekennzeichnet, daß** sie aufgebaut sind wie folgt, bezogen auf Isocyanatgruppen in Aufbaukomponente (a)
(b) 0,5 bis 30 mol% primäre oder sekundäre Aminogruppen,
(c) mindestens 0,3 mol% bis zu 25 mol% bezogen auf gegenüber Isocyanat reaktive Gruppen in (c),
(d) 0 bis 15 mol% bezogen auf gegenüber Isocyanat reaktive Gruppen in (d), und
(e) 0 bis 15 mol% bezogen auf gegenüber Isocyanat reaktive Gruppen in (e).

11. Wasserdispergierbare Polyisocyanate (A) gemäß einem der vorstehenden Ansprüche, **dadurch gekennzeichnet, daß** die Sulfonsäuregruppen zumindest teilweise neutralisiert sind.

12. Wasserdispergierbare Polyisocyanate (A) gemäß Anspruch 11, **dadurch gekennzeichnet, daß** die Sulfonsäuregruppen zumindest teilweise mit tertiären Aminen neutralisiert sind.

13. Wäßrige Beschichtungsmassen, enthaltend mindestens ein wasserdispergierbares Polyisocyanat (A) gemäß einem der vorstehenden Ansprüche und mindestens einen Bindemittel ausgewählt aus der Gruppe bestehend aus Polyacrylat-Polyol-Dispersionen, Polyester-Polyol-Dispersionen, Polyether-Polyol-Dispersionen, Polyurethan-Polyol-Dispersionen, Polycarbonat-Polyol-Dispersionen und deren Hybride.

14. Verwendung von Beschichtungsmassen enthaltend mindestens ein wasserdispergierbares Polyisocyanat (A) gemäß einem der Ansprüche 1 bis 12 zum Beschichten von Holz, Holzfurnier, Papier, Pappe, Karton, Textil, Folie, Leder, Vlies, Kunststoffoberflächen, Glas, Keramik, mineralischen Baustoffen, Zement-Formsteine, Faserzementplatten oder Metallen, die jeweils optional vorbeschichtet oder vorbehandelt sein können.

15. Verwendung von Beschichtungsmassen enthaltend mindestens ein wasserdispergierbares Polyisocyanat (A) gemäß einem der Ansprüche 1 bis 12 zur Beschichtung von Gebäudeteilen, (Groß-)Fahrzeugen, Flugzeugen, industriellen Anwendungen, Dekolackierungen, Brücken, Gebäuden, Strommasten, Tanks, Containern, Pipelines, Kraftwerken, chemischen Anlagen, Schiffen, Kränen, Pfählen, Spundwänden, Armaturen, Rohren, Fittings, Flanschen, Kupplungen, Hallen, Dächern und Baustahl, Möbeln, Fenstern, Türen, Parkett, Can-Coating und Coil-Coating, für Bodenbeläge, Parkdecks, in Krankenhäusern und in Automobillacken als OEM und refinish-Anwendung.

16. Lacke, Klebstoffe und Dichtungsmassen, enthaltend mindestens ein Polyisocyanat gemäß einem der Ansprüche 1 bis 12.

17. Substrat, beschichtet, verklebt oder abgedichtet mit einem Lack, einem Klebstoff oder eine Dichtungsmasse gemäß Anspruch 16.

## Claims

1. A water-dispersible polyisocyanate (A), comprising as synthesis components
(a) at least one diisocyanate or polyisocyanate,
(b) at least one substituted aromatic sulfonic acid which carries precisely one primary or secondary, preferably primary, amino group, the positions on the aromatic ring ortho to the amino group being unsubstituted,
(c) at least one monofunctional polyalkylene glycol,
(d) optionally at least one high molecular mass diol or polyol, and
(e) optionally at least one low molecular mass diol or polyol.

2. The water-dispersible polyisocyanate (A) according to claim 1, wherein component (a) is a polyisocyanate synthesized from (cyclo) aliphatic isocyanates.

3. The water-dispersible polyisocyanate (A) according to either of the preceding claims, wherein component (a) is a polyisocyanate containing allophanate and/or isocyanurate groups which is based on isophorone diisocyanate and/or 1,6-hexamethylene diisocyanate.

4. The water-dispersible polyisocyanate (A) according to any one of the preceding claims, wherein component (b) is a substituted aromatic sulfonic acid of the formula (I) 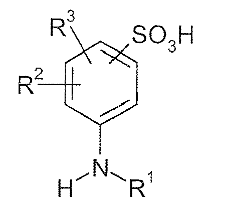 in which
R¹, R² and R³ independently of one another are hydrogen, alkyl, cycloalkyl or aryl, it being possible for each of the stated radicals to be substituted by aryl, alkyl, aryloxy, alkyloxy, heteroatoms and/or heterocycles,
and R² and R³ may also together form a ring, preferably a fused-on aromatic ring,
with the proviso that at least one of the radicals R² and R³ is other than hydrogen.

5. The water-dispersible polyisocyanate (A) according to claim 4, wherein one of the radicals R² and R³ in formula (I) is hydrogen and the other is other than hydrogen.

6. The water-dispersible polyisocyanate (A) according to claim 4 or 5, wherein the sulfonic acid group in formula (I) is located meta to the primary or secondary amino group on the aromatic ring.

7. The water-dispersible polyisocyanate (A) according to claim 5, wherein, of the substituents R² and R³ in formula (I), the one which is other than hydrogen is located para on the aromatic ring relative to the primary or secondary amino group.

8. The water-dispersible polyisocyanate (A) according to any one of the preceding claims, wherein the compound (b) is selected from the group consisting of 4-aminotoluene-2-sulfonic acid, 5-aminotoluene-2-sulfonic acid, and 2-aminonaphthalene-4-sulfonic acid.

9. The water-dispersible polyisocyanate (A) according to any one of the preceding claims, wherein the compound (c) fulfills the formula R⁴-O-[-Xᵢ-]ₖ-H
in which
R⁴ is C₁ - C₂₀ alkyl, C₂ - C₂₀ alkyl uninterrupted or interrupted by one or more oxygen and/or sulfur atoms and/or by one or more substituted or unsubstituted imino groups, or is C₆ - C₁₂ aryl, C₅ - C₁₂ cycloalkyl or a five- or six-membered heterocycle containing oxygen, nitrogen and/or sulfur atoms, it being possible for each of the stated radicals to be substituted by functional groups, aryl, alkyl, aryloxy, alkyloxy, halogen, heteroatoms and/or heterocycles,
k is an integer from 5 to 40, and
each Xᵢ for i = 1 to k can be selected independently from the group consisting of -CH₂-CH₂-O-, -CH2-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O-, and -CHPh-CH₂-O-,
in which Ph is phenyl and Vin is vinyl.

10. The water-dispersible polyisocyanate (A) according to any one of the preceding claims, having the following construction, based on isocyanate groups in synthesis component (a) :
(b) 0.5 to 30 mol% of primary or secondary amino groups,
(c) at least 0.3 mol% up to 25 mol%, based on isocyanate-reactive groups in (c),
(d) 0 to 15 mol%, based on isocyanate-reactive groups in (d), and
(e) 0 to 15 mol%, based on isocyanate-reactive groups in (e).

11. The water-dispersible polyisocyanate (A) according to any one of the preceding claims, wherein the sulfonic acid groups have been at least partly neutralized.

12. The water-dispersible polyisocyanate (A) according to claim 11, wherein the sulfonic acid groups have been at least partly neutralized with tertiary amines.

13. An aqueous coating composition comprising at least one water-dispersible polyisocyanate (A) according to any one of the preceding claims and at least one binder selected from the group consisting of polyacrylate-polyol dispersions, polyester-polyol dispersions, polyether-polyol dispersions, polyurethane-polyol dispersions, polycarbonate-polyol dispersions, and their hybrids.

14. The use of a coating composition comprising at least one water-dispersible polyisocyanate (A) according to any one of claims 1 to 12 for coating wood, wood veneer, paper, paperboard, cardboard, textile, film, leather, nonwoven, plastics surfaces, glass, ceramic, mineral building materials, cement moldings, fiber-cement slabs or metals, each of which may optionally have been precoated or pretreated.

15. The use of a coating composition comprising at least one water-dispersible polyisocyanate (A) according to any one of claims 1 to 12 for coating parts of buildings, (large) vehicles, aircraft, industrial applications, decorative coatings, bridges, buildings, power masts, tanks, containers, pipelines, power stations, chemical plants, ships, cranes, posts, sheet piling, valves, pipes, fittings, flanges, couplings, halls, roofs, and structural steel, furniture, windows, doors, woodblock flooring, can coating and coil coating, for floor coverings, parking levels, in hospitals, and in automobile finishes as OEM and refinish application.

16. A coating material, adhesive or sealant comprising at least one polyisocyanate according to any one of claims 1 to 12.

17. A substrate coated, bonded or sealed with a coating material, adhesive or sealant according to claim 16.

## Revendications

1. Polyisocyanates (A) dispersables dans l'eau, contenant en tant que composants structuraux
(a) au moins un di- ou polyisocyanate,
(b) au moins un acide sulfonique aromatique substitué, qui porte exactement un groupe amino primaire ou secondaire, de préférence primaire, les positions sur le noyau aromatique en position ortho par rapport au groupe amino n'étant pas substituées,
(c) au moins un polyalkylèneglycol monofonctionnel,
(d) en option au moins un diol ou polyol de masse moléculaire élevée et
(e) en option au moins un diol ou polyol de faible masse moléculaire.

2. Polyisocyanates (A) dispersables dans l'eau, selon la revendication 1, **caractérisés en ce que** le composant (a) consiste en un polyisocyanate constitué d'isocyanates (cyclo)aliphatiques.

3. Polyisocyanates (A) dispersables dans l'eau, selon l'une quelconque des revendications précédentes, **caractérisés en ce que** le composant (a) consiste en un polyisocyanate contenant des groupes allophanate et/ou isocyanurate, à base d'isophorone-diisocyanate et/ou de 1,6-hexaméthylène-diisocyanate.

4. Polyisocyanates (A) dispersables dans l'eau, selon l'une quelconque des revendications précédentes, **caractérisés en ce que** le composant (b) consiste en un acide sulfonique aromatique substitué de formule (I), 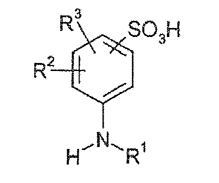 dans laquelle
R¹, R² et R³ représentent, chacun indépendamment, un atome d'hydrogène, un groupe alkyle, cycloalkyle ou aryle, les radicaux nommés pouvant être substitués chacun par aryle, alkyle, aryloxy, alkyloxy, des hétéroatomes et/ou des hétérocycles,
R² et R³ pouvant également former ensemble un cycle, de préférence un cycle aromatique condensé,
étant entendu qu'au moins l'un des radicaux R² et R³ est différent d'un atome d'hydrogène.

5. Polyisocyanates (A) dispersables dans l'eau, selon la revendication 4, **caractérisés en ce que** dans la formule (I) l'un des radicaux R² et R³ est un atome d'hydrogène et l'autre est différent d'un atome d'hydrogène.

6. Polyisocyanates (A) dispersables dans l'eau, selon la revendication 4 ou 5, **caractérisés en ce que** dans la formule (I) le groupe sulfo se trouve en position méta par rapport au groupe amino primaire ou secondaire sur le noyau aromatique.

7. Polyisocyanates (A) dispersables dans l'eau, selon la revendication 5, **caractérisés en ce que** dans la formule (I) parmi les substituants R² et R³ celui des radicaux qui est différent d'un atome d'hydrogène se trouve en position para sur le noyau aromatique, par rapport au groupe amino primaire ou secondaire.

8. Polyisocyanates (A) dispersables dans l'eau, selon l'une quelconque des revendications précédentes, **caractérisés en ce que** le composé (b) est choisi dans le groupe constitué par l'acide 4-aminotoluène-2-sulfonique, l'acide 5-aminotoluène-2-sulfonique et l'acide 2-aminonaphtalène-4-sulfonique.

9. Polyisocyanates (A) dispersables dans l'eau, selon l'une quelconque des revendications précédentes, **caractérisés en ce que** le composé (c) correspond à la formule
R⁴-O-[-Xᵢ-]ₖ-H
dans laquelle
R⁴ représente un groupe alkyle en C₁-C₂₀, un groupe alkyle en C₂-C₂₀ éventuellement interrompu par un ou plusieurs atomes d'oxygène et/ou de soufre et/ou un plusieurs groupes imino substitués ou non substitués, un groupe aryle en C₆-C₁₂, cycloalkyle en C₅-C1₂ ou un hétérocycle à cinq ou six chaînons, comportant des atomes d'oxygène, d'azote et/ou de soufre, les radicaux nommés pouvant être substitués chacun par des groupes fonctionnels, aryle, alkyle, aryloxy, alkyloxy, des atomes d'halogène, des hétéroatomes et/ou des hétérocycles,
k représente un nombre entier valant de 5 à 40 et chaque Xᵢ pour i = 1 à k peut être choisi, indépendamment des autres, dans l'ensemble constitué par -CH₂-CH₂-O-, -CH₂-CH(CH₃)-O-, -CH(CH₃)-CH₂-O-, -CH₂-C(CH₃)₂-O-, -C(CH₃)₂CH₂-O-, -CH₂-CHVin-O-, -CHVin-CH₂-O-, -CH₂-CHPh-O- et -CHPh-CH₂-O-,
où Ph signifie phényle et Vin signifie vinyle.

10. Polyisocyanates (A) dispersables dans l'eau, selon l'une quelconque des revendications précédentes, **caractérisés en ce qu'**ils sont constitués comme suit, par rapport aux groupes isocyanate dans le composant structural (a)
(b) 0,5 à 30 % en moles de groupes amino primaires ou secondaires,
(c) au moins 0,3 % en moles à 25 % en moles, rapporté aux groupes réactifs vis-à-vis d'isocyanate dans (c),
(d) 0 à 15 % en moles rapporté aux groupes réactifs vis-à-vis d'isocyanate dans (d), et
(e) 0 à 15 % en moles rapporté aux groupes réactifs vis-à-vis d'isocyanate dans (e).

11. Polyisocyanates (A) dispersables dans l'eau, selon l'une quelconque des revendications précédentes, **caractérisés en ce que** les groupes sulfo sont au moins partiellement neutralisés.

12. Polyisocyanates (A) dispersables dans l'eau, selon la revendication 11, **caractérisés en ce que** les groupes sulfo sont au moins partiellement neutralisés par des amines tertiaires.

13. Matières aqueuses de revêtement, contenant au moins un polyisocyanate (A) dispersable dans l'eau, selon l'une quelconque des revendications précédentes, et au moins un liant choisi dans le groupe constitué par des dispersions de polyacrylate-polyol, des dispersions de polyester-polyol, des dispersions de polyéther-polyol, des dispersions de polyuréthanne-polyol, des dispersions de polycarbonate-polyol et leurs hybrides.

14. Utilisation de matières de revêtement contenant au moins un polyisocyanate (A) dispersable dans l'eau, selon l'une quelconque des revendications 1 à 12, pour le revêtement de bois, placage de bois, papier, carton, carte, textile, film, cuir, non-tissé, surfaces de matière plastique, verre, céramique, matériaux de construction minéraux, briques de ciment, plaques de fibrociment ou métaux, qui peuvent chacun être en option pré-enduits ou prétraités.

15. Utilisation de matières de revêtement contenant au moins un polyisocyanate (A) dispersable dans l'eau, selon l'une quelconque des revendications 1 à 12, pour le revêtement d'éléments de construction, le revêtement de (grands) véhicules, d'aéronefs, des applications industrielles, des revêtements de peintures décoratives, le revêtement de ponts, de bâtiments, de pylônes, de cuves, de conteneurs, de pipelines, de centrales électriques, d'installations chimiques, de bateaux, de grues, de poteaux, de cloisons de palplanches, d'accessoires, de tubes, de garnitures, de brides, de dispositifs d'accouplement, de hangars, de toitures et d'acier de construction, de meubles, fenêtres, portes, parquet, le revêtement de boîtes *can-coating* et le revêtement de rubans continus *coil-*coating, pour des revêtements de sol, des aires de stationnement, dans des hôpitaux et dans des peintures pour automobiles en tant que OEM et l'application de retouches.

16. Peintures, adhésifs et matières d'étanchéité, contenant au moins un polyisocyanate selon l'une quelconque des revendications 1 à 12.

17. Support, revêtu, collé ou étanchéifié avec une peinture, un adhésif ou une matière d'étanchéité selon la revendication 16.
